(19)

Europäisches
Patentamt

European
Patent Office

Office européen
des brevets

(11) **EP 2 916 482 A1**

(12) **EUROPEAN PATENT APPLICATION**
published in accordance with Art. 153(4) EPC

(43) Date of publication:
09.09.2015 Bulletin 2015/37

(51) Int Cl.:
*H04L 9/32* (2006.01)          *G06F 12/00* (2006.01)
*G06F 21/60* (2013.01)          *G09C 1/00* (2006.01)

(21) Application number: 12887668.7

(22) Date of filing: 31.10.2012

(86) International application number:
PCT/JP2012/078249

(87) International publication number:
WO 2014/068734 (08.05.2014 Gazette 2014/19)

(84) Designated Contracting States:
AL AT BE BG CH CY CZ DE DK EE ES FI FR GB
GR HR HU IE IS IT LI LT LU LV MC MK MT NL NO
PL PT RO RS SE SI SK SM TR
Designated Extension States:
BA ME

(71) Applicant: Hitachi, Ltd.
Tokyo 100-8280 (JP)

(72) Inventors:
• YOSHINO, Masayuki
  Chiyoda-ku,
  Tokyo 100-8280 (JP)

• SATO Hisayoshi
  Chiyoda-ku,
  Tokyo 100-8280 (JP)
• NAGANUMA Ken
  Chiyoda-ku,
  Tokyo 100-8280 (JP)

(74) Representative: MERH-IP
Matias Erny Reichl Hoffmann
Paul-Heyse-Strasse 29
80336 München (DE)

(54) **DATA-STORAGE VERIFICATION SYSTEM AND METHOD**

(57)     An object of the present invention is to propose a data possession verification system and method which can verify with a small communication amount or a small calculation amount whether a server device possesses verification target data deposited to the server device by a user terminal.

In the data possession verification system and method for verifying whether a server device possesses the verification target data deposited to the server device by the user terminal, the user terminal transmits predetermined verification information to the server device, and the server device calculates server side evidence data, which is specific to the verification target data and has a smaller data size than that of the verification target data, by using the possessed verification target data and the verification information, and transmits the calculated server side evidence data to the user terminal. The user terminal compares user terminal side evidence data based on the verification information and the server side evidence data transmitted from the server device, and determines based on a result of the comparison that the server device possesses the verification target data.

*FIG. 8*

## Description

Technical Field

The present invention relates to a data possession verification system and method. The data possession verification system and method are, for example, appropriate and suitable for a cloud system for providing a cloud service.

Background Art

Recently, a user does not own a server and a storage device for purposes of efficient information system development and reduction in operations management cost, and an operation management form, called a cloud, for outsourcing data possession to an external operator is focused. Advantages such as efficient development and cost reduction are obtained by fusing the cloud service. On the other hand, an operator managing a server and a storage device is not a user of the server and the storage device, and therefore the user is concerned about depositing confidential information to an external operator. Therefore, data reliability needs to be ensured by utilizing an encryption technique as a detection measure of data loss.

However, in a method, in which data loss is simply detected by downloading the data, a network load is increased since a communication amount significantly increases, and therefore all of data deposited to the information system administrator cannot be validated. Also, this is against the initial purpose such as cost reduction, and a countermeasure technique is required.

In such countermeasure techniques, in a server/client model, an encryption method is known in which a client can request a process for validating information possession from a server while depositing data to the server. For example, a method for realizing the data possession validation process is described in NPL 1. It is certified by using a theory called a security proof in a technique described in NPL 1 that false evidence is not possible in the case where a server operator does not possess data. NPL 1 discloses a technique to safely certify data possession deposited to a server while detecting an unauthorized process of such as a cloud operator by using such a safe encryption method.

Citation List

Non-Patent Literature

NPL 1: Giuseppe Ateniese, Randal Burns, Reza Curtmola, Joseph Herring, Lea Kissner, Zachary Peterson, Dawn Song: Provable Data Possession at Untrusted Stores. Proceedings of 14th ACM Conference on Computer and Communications Security (CCS 2007) Giuseppe Ateniese, Randal Burns, Reza Curtmola, Joseph Herring, Lea Kissner, Zachary Peterson, Dawn Song: Provable Data Possession at Untrusted Stores. Proceedings of 14th ACM Conference on Computer and Communications Security (CCS 2007).

Summary of Invention

Technical Problem

In the case where the technique described in NPL 1 is used for data possession verification described above, not only a server, but a client is required to have an enormous calculation amount (such as n times modular exponentiations) to conclusively verify data possession in a storage device with 100% accuracy.

For example, a model assuming that a client is a portable mobile PC such as a cell phone and a smartphone requiring power saving or a card like small-sized microcomputer and RFID need to reduce a calculation amount of the client as much as possible. However, in the technique described in NPL 1, in the case where a client requests data possession verification protocol from a management server (a server in the above-described example), a calculation amount of a server/client actually becomes enormous. For example, in the case where file data of 1 giga byte is administered for each 1 kilo byte in accordance with such as a file format of an operating system (OS), a client needs to perform an inverse calculation or a modular exponentiation, known that a calculation load thereof is high, more than 100 million times to conclusively verify data possession of a server with 100% accuracy.

The above-described issue is considered in the present invention, and an object of the present invention is to propose a data possession verification system and method which can verify with a small communication amount or a small calculation amount whether a server device possesses verification target data deposited to the server device by a user terminal.

Solution to Problem

According to the present invention, to solve the issue, in a data possession verification system configured to verify whether a server device possesses verification target data deposited to the server device by a user terminal, predetermined verification information is transmitted from the user terminal to the server device, and the server device calculates server side evidence data, which is specific to the verification target data and has a smaller data size than that of the verification target data, by using the possessed verification target data and the verification information, and transmits the calculated server side evidence data to the user terminal, and the user terminal compares user terminal side evidence data based on the verification information and the server side evidence data transmitted from the server device, and determines based on a result of the comparison whether the server device possesses the verification target data.

In the present invention, a data possession verification method for verifying whether a server device possesses verification target data deposited to the server device by a user terminal includes a first step in which the user terminal transmits predetermined verification information to the server device, and the server device calculates server side evidence data, which is specific to the verification target data and has a smaller data size than that of the verification target data, by using the possessed verification target data and the verification information, and transmits the calculated server side evidence data to the user terminal, and a second step in which the user terminal compares user terminal side evidence data based on the verification information and the server side evidence data transmitted from the server device, and determines based on a result of the comparison whether the server device possesses the verification target data.

Advantageous Effects of Invention

By the data possession verification system and method according to the present invention, a data possession verification system and method which can verify with a small communication amount or a small calculation amount whether a server device possesses verification target data deposited to the server device by a user terminal can be realized.

Brief Description of Drawings

[FIG. 1] FIG. 1 is a block diagram illustrating an overall configuration of a cloud system according to first to third embodiments.
[FIG. 2] FIG. 2 is a block diagram illustrating a hardware configuration of a user terminal and a service providing server.
[FIG. 3] FIG. 3 is a block diagram illustrating a logical configuration of the user terminal according- to the first embodiment.
[FIG. 4] FIG. 4 is a block diagram illustrating a logical configuration of the service providing server according to the first and third embodiments.
[FIG. 5] FIG. 5 is a flowchart illustrating a processing procedure for a public parameter registering process according to the first embodiment.
[FIG. 6] FIG. 6 is a flowchart illustrating a processing procedure for a verification target data registering process according to the first embodiment.
[FIG. 7] FIG. 7 is a conceptual diagram for description of association between a data identifier and verification target data.
[FIG. 8] FIG. 8 is a flowchart illustrating a processing procedure for a verification target data possession verification process according to the first embodiment.
[FIG. 9] FIG. 9 is a block diagram illustrating a logical configuration of a user terminal according to the second embodiment.
[FIG. 10] FIG. 10 is a block diagram illustrating a logical configuration of a service providing server according to the second embodiment.
[FIG. 11] FIG. 11 is a flowchart illustrating a processing procedure for a verification target data possession verification process according to the second embodiment.
[FIG. 12] FIG. 12 is a block diagram illustrating a logical configuration of a user terminal according to the third embodiment.
[FIG. 13] FIG. 13 is a flowchart illustrating a processing procedure for a public parameter registration process according to the third embodiment.
[FIG. 14] FIG. 14 is a flowchart illustrating a processing procedure for a verification target data registration process according to the third embodiment.

[FIG. 15] FIG. 15 is a conceptual diagram for description of association between a data identifier and verification target data according to the third embodiment.

[FIG. 16] FIG. 16 is a flowchart illustrating a processing procedure for a verification target data possession verification process according to the third embodiment.

Description of Embodiments

An embodiment of the present invention will be described below with reference to drawings.

(1) First Embodiment

(1-1) Configuration of a Cloud System According to the Embodiment

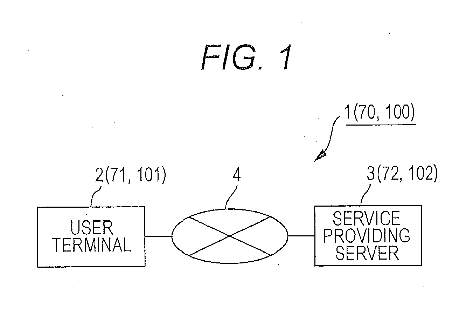

In FIG. 1, 1 denotes a cloud system according to the embodiment as a whole. The cloud system 1 includes a user terminal 2 including, for example, a cell phone and a personal computer and a service providing server 3 of a cloud service operator, and these are connected via the network 4.

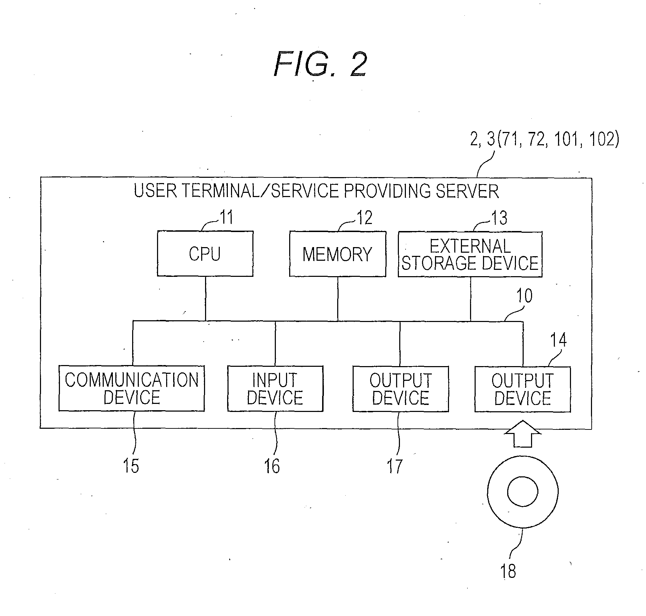

The user terminal 2 and the service providing server 3 include, as illustrated in FIG. 2, a central processing unit (CPU) 11 connected each other via an internal bus 10, a memory 12, an external storage device 13, a reading and writing device 14, a communication device 15, an input device 16, and output device 17.

The CPU 11 is a processor responsible for operation control of an overall device (the user terminal 2 or the service providing server 3). The memory 12 is used for storing each program and also used as a work memory of the CPU 11. The external storage device 13 includes, for example, a nonvolatile mass storage device of such as a hard disk device, and programs and data are stored in the external storage device 13. A program stored in the external storage device 13 is expanded to the memory 12. When the CPU 11 executes the program, the user terminal 2 or the service providing server 3 wholly performs each processing to be described later.

The reading and writing device 14 includes a memory reader/writer corresponding a storage medium 18 such as a secure digital (SD) card, a micro SD card, and a micro secure digital high capacity (SDHC) card, or a disc device corresponding to the storage medium 18 such as a compact disc (CD) or a digital versatile disc (DVD).

The communication device 15 is an interface for connecting the user terminal 2 or the service providing server 3 to the network 4 (FIG. 1) and includes, for example, a network interface card (NIC). Also the input device 16 includes, for example, a touch button, a keyboard, and/or a mouse. The output device 17 includes, for example, a liquid crystal panel and a liquid crystal display.

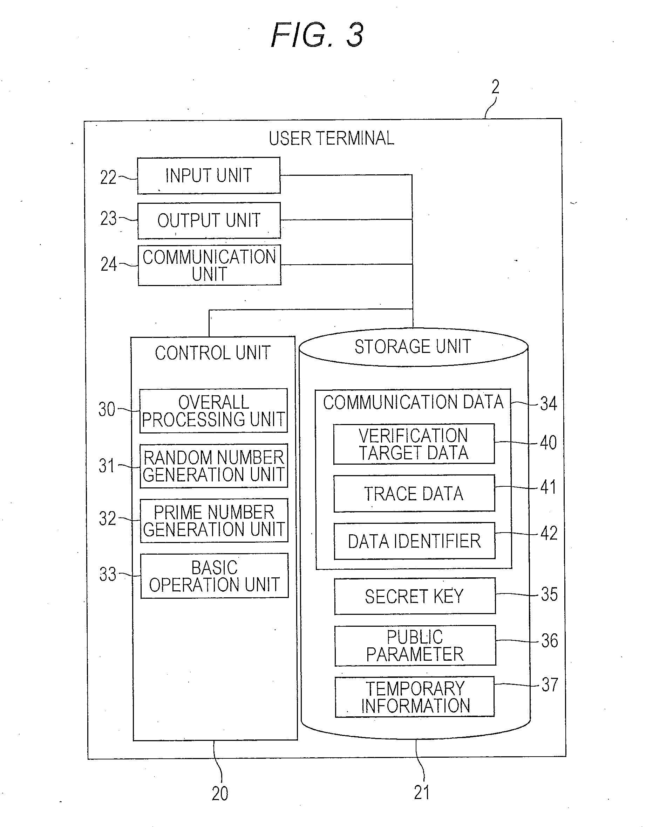

FIG. 3 illustrates a logical configuration of the user terminal 2. As is obvious from FIG. 3, the user terminal 2 includes a control unit 20, a storage unit 21, an input unit 22, an output unit 23, and a communication unit 24.

The control unit 20 is a functional block for performing each process to be described later and includes an overall processing unit 30, a random number generation unit 31, a prime number generation unit 32, and a basic operation unit 33. The overall processing unit 30, the random number generation unit 31, the prime number generation unit 32, and the basic operation unit 33 are embodied by executing corresponding programs expanded to the memory 12 (FIG. 2) by the CPU 11 (FIG. 2) of the user terminal 2.

The overall processing unit 30 is a function to integratedly control processes in the user terminal 2, and performs each process such as a control process responding to an instruction from a user, which has been input via the input unit 22, an image output to the output unit 23, and communication with the service providing server 3 via the communication unit 24.

The random number generation unit 31 is a function to generate a dummy random number with an arbitrary bit length (for example, 512 bit, 1024 bit, or 2048 bit) preliminary specified by using such as a secret key. In this case, a data value of the secret key is updated to a new data value by the random number generation unit 31. The random number generation unit 31 may generate a random number by using a physical phenomenon such as a temperature, a time, and a power amount and a random number generation algorithm.

The prime number generation unit 32 is a function to request generation of a dummy random number from the random number generation unit 31 and generate a prime number with an arbitrary bit length (for example 512 bit, 1024 bit, or 2048 bit) preliminary set through a test to determine whether the generated dummy random number is a prime number. As an algorithm of a prime number in the prime number generation unit 32, a normal prime number generation algorithm can be applied.

The basic operation unit 33 is a function to perform processes regarding basic arithmetic operations such as an addition, a subtraction, and a comparison operation.

The storage unit 21 includes the memory 12, the external storage device 13, and the storage medium 18, which have been described above regarding FIG. 2. The storage unit 21 stores communication data 34, a secret key 35, a public parameter 36, and temporary information 37 as to be described below.

The communication data 34 includes verification target data 40, trace data 41, and a data identifier 42. The verification target data 40 is user data deposited to the service providing server 3. In the case of the embodiment, this verification target data 40 is deleted after being transmitted to the service providing server 3, but not necessarily deleted.

The trace data 41 is data used for verifying whether the service providing server 3 possesses the verification target data 40, and calculated by using the verification target data 40. A specific method for calculating the trace data 41 will be described later. The data identifier 42 is an identifier specific to the verification target data 40 generated when the verification target data 40 is registered to the service providing server 3. The data identifier 42 is used when the verification target data 40 requested to the service providing server 3 is specified.

The secret key 35 is an encryption key used when the trace data 41 is generated, and the secret key 35 is generated in the prime number generation unit 32 in the user terminal 2. The public parameter 36 is an encryption key used to verify whether the service providing server 3 possesses the verification target data 40. The temporary information 37 is data temporarily needed in a process performed by the control unit 20.

The input unit 22 is a function used when a user controls the user terminal 2 and includes the input device 16 (FIG. 2). Also, the output unit 23 is a function to provide a user with each type of information and includes the output device 17 (FIG. 2). The communication unit 24 is an interface used when the user terminal 2 communicates with the service providing server 3 and includes the communication device 15 (FIG. 2).

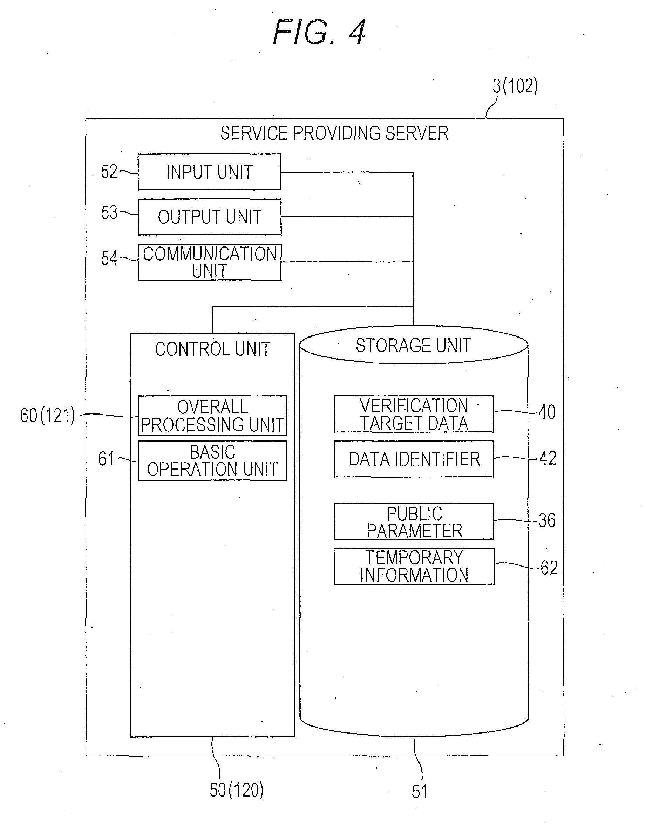

FIG. 4 illustrates a logical configuration of the service providing server 3. As is obvious from FIG. 4, the service providing server 3 includes a control unit 50, a storage unit 51, an input unit 52, an output unit 53, and a communication unit 54.

The control unit 50 is a functional block for performing each process to be described later and includes an overall processing unit 60 and a basic operation unit 61. The overall processing unit 60 and the basic operation unit 61 are embodied by executing corresponding programs expanded to the memory 12 (FIG. 2) by the CPU 11 (FIG. 2) of the service providing server 3.

The overall processing unit 60 is a function to integratedly control processes in the service providing server 3, and performs each process such as a control process responding to an instruction from a user, which has been input via the input unit 52, an image output to the output unit 53, and communication with the user terminal 2 via the communication unit 54. Also the basic operation unit 61 is a function to perform processes regarding basic arithmetic operations such as an addition, a subtraction, and a comparison operation.

The storage unit 51 includes the memory 12, the external storage device 13, and the storage medium 18, which have been described above regarding FIG. 2. The storage unit 51 stores the verification target data 40, the data identifier 42, the public parameter 36, and temporary information 62 as to be described below.

The verification target data 40 is user data deposited from the user terminal 2. The data identifier 42 is an identifier specific to the verification target data 40 transmitted from the user terminal 2 with the verification target data 40. Also, the public parameter 36 is an encryption key used to verify whether the service providing server 3 possesses the verification target data 40, and preliminarily registered by the user terminal 2. The temporary information 62 is information temporarily required in a process performed by the control unit 50.

The input unit 52 is a function used when a user controls the service providing server 3, and includes the input device 16 (FIG. 2) . Also, the output unit 53 is a function to provide an operator of the service providing server 3 with each type of information, and includes the output device 17 (FIG. 2). The communication unit 54 is an interface used when the service providing server 3 communicates with the user terminal 2, and includes the communication device 15 (FIG. 2).

(1-2) Data possession Verification Method in the Cloud System

A data possession verification method in the cloud system 1 will be described next with reference to FIGS. 3 to 8. The data possession verification method is realized by a public parameter registration process for preliminarily registering the public parameter 36 (FIG. 3) to the service providing server 3, a verification target data registration process for depositing the verification target data 40 (FIG. 3) in the user terminal 2 to the service providing server 3, and then a verification target data possession verification process for verifying that the verification target data 40 is possessed in the service providing server 3. The public parameter registration process, the verification target data registration process, and the verification target data possession verification process will be described below.

(1-2-1) Public Parameter Registration Process

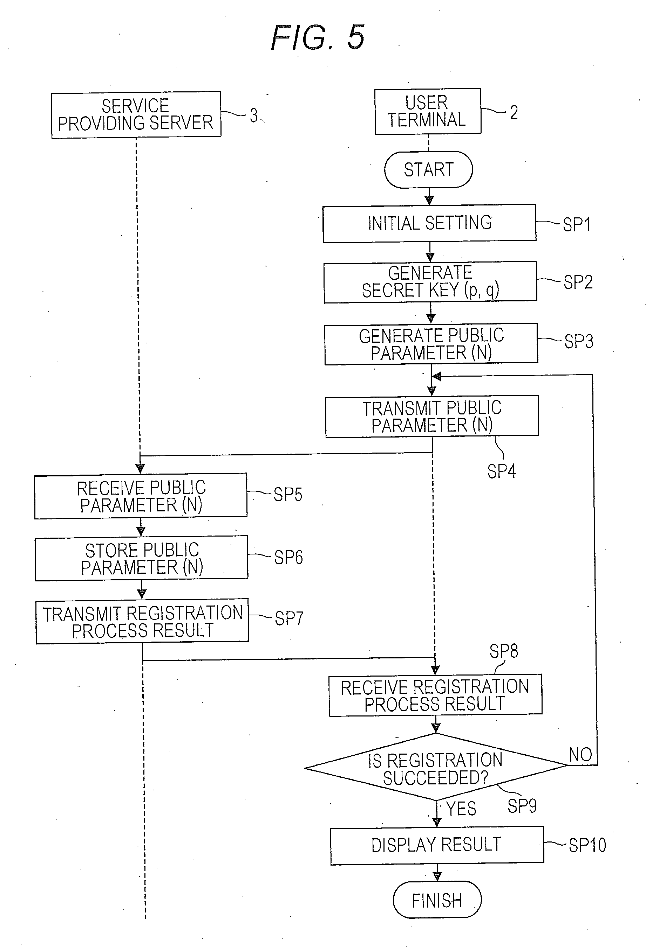

FIG. 5 illustrates a successive flow of a public parameter registration process according to the embodiment. The public parameter registration process is a process preliminarily performed to share a public parameter between the user terminal 2 and the service providing server 3 so as to verify whether the service providing server 3 possesses the verification target data 40 deposited to a cloud service operator.

The public parameter registration process is started by inputting setting information on the secret key 35 and the public parameter 36 by operating the input unit 22 of user's user terminal 2 by the user and inputting a registration instruction of the public parameter 36 to the service providing server 3 (hereinafter called a public parameter registration instruction).

Practically, the overall processing unit 30 (FIG. 3) in the user terminal 2 first provides the prime number generation unit 32 with an instruction for generating a prime number after the public parameter registration instruction is input via the input unit 22 (SP1). The prime number generation unit 32 generates two prime numbers (p and q) in accordance with the instruction. The overall processing unit 30 stores the two prime numbers p and q, which have been generated by the prime number generation unit 32, in the storage unit 21 as the secret key 35 (SP2).

Next, the overall processing unit 30 reads out two secret keys p and q stored in the storage unit 21 in step SP1 and provides the basic operation unit 33 with the read two secret keys p and q and an instruction for calculating a product of the two secret keys p and q. In this manner, the basic operation unit 33 calculates a product of the two secret keys p and q in accordance with the instruction (SP3).

Next, the overall processing unit 30 stores the product of the two secret keys p and q calculated by the basic operation unit 33 in the storage unit 21 as the public parameter 36, and transmits the public parameter 36 to the service providing server 3 via the communication unit 24 (FIG. 3) (SP4).

On the other hand, the overall processing unit 60 (FIG. 4) of the service providing server 3 receives the public parameter 36 via the communication unit 54 (SP5) and stores the public parameter 36 in the storage unit 51 (SP6). Also, the overall processing unit 60 transmits, to the user terminal 2 via the communication unit 54, a registration process result indicating whether the public parameter 36 is normally registered (normally stored in the storage unit 51) (SP7).

The overall processing unit 30 in the user terminal 2 receives the registration process result via the communication unit 24 (SP8) and determines based on the registration process result whether the public parameter 36 has been successfully registered to the service providing server 3 (SP9). The overall processing unit 30 performs a retransmission process for the public parameter 36 in the case where the overall processing unit 30 has determined that the registration of the public parameter 36 has been failed (SP4). In the case where the overall processing unit 30 has determined that the public parameter 36 has been successfully registered, the overall processing unit 30 finishes the public parameter registration process.

(1-2-2) Verification Target Data Registration Process

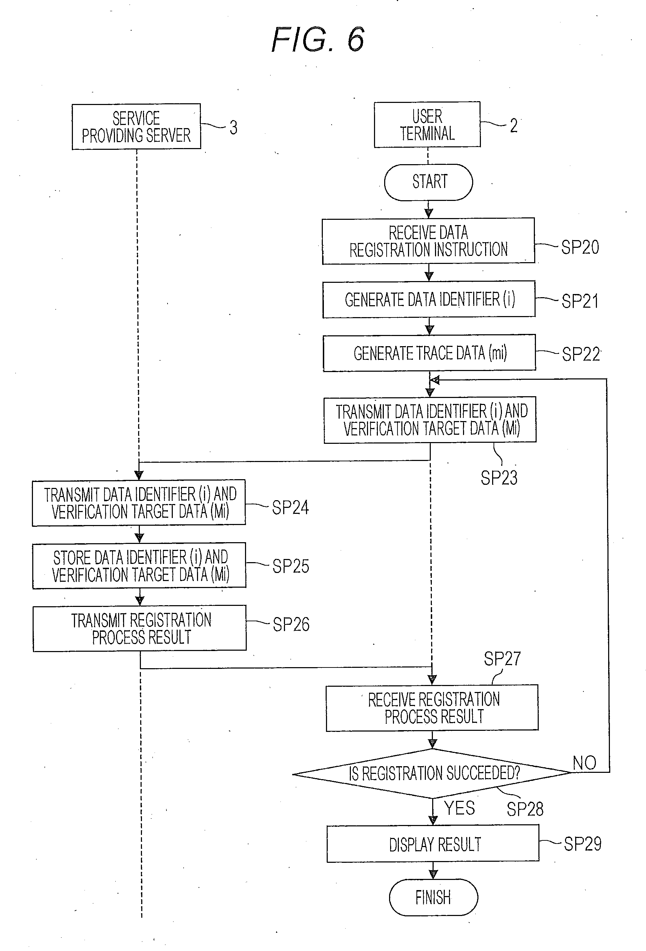

FIG. 6 illustrates a successive flow of a verification target data registration process according to the embodiment. The verification target data registration process is a process for depositing the verification target data 40 to the service providing server 3 after generating the trace data 41 (FIG. 3) based on the verification target data 40.

The verification target data registration process is started by specifying requested verification target data 40 among the verification target data 40 stored in the storage unit 21 of the user terminal 2 by operating the input unit 22 of user's user terminal 2 by the user, and inputting a registration instruction of the verification target data 40 to the service providing server 3 (hereinafter called a verification target data registration instruction).

Practically, after the verification target data registration instruction is input via the input unit 22 (SP20), the overall processing unit 30 (FIG. 3) in the user terminal 2 first generates the data identifier 42 of the verification target data 40 specified as a registration target in the verification target data registration instruction and stores the generated data identifier 42 in the storage unit 21 (SP21).

Then, the overall processing unit 30 provides the basic operation unit 33 with an instruction for generating the trace data 41 of the verification target data 40 by using the two secret keys p and q stored in the storage unit 21 in step SP2 in the public parameter registration process (FIG. 5) and the verification target data 40 specified in the verification target data registration instruction. In accordance with the instruction, the verification target data 40 to be registered is denoted as Mi and the trace data 41 is denoted as mi, and the basic operation unit 33 calculates the trace data 41 satisfying the following formula and stores the calculated trace data 41 in the storage unit 21 (SP22).
[Mathematical Formula 1]

$$\mathtt{mi = Mimod(p - 1)(q - 1)} \qquad\qquad ......(1)$$

Incidentally, "mod" is an operator for calculating a remainder after division. Therefore, the formula (1) represents that a remainder after dividing the verification target data 40 by products (p-1)(q-1) of a value obtained by subtracting "1" from one of the secret key p and a value obtained by subtracting "1" from another secret key q is calculated as the trace data 41.

Then, the overall processing unit 30 transmits, to the service providing server 3 via the communication unit 24, the verification target data 40 specified in the verification target data registration instruction and the data identifier 42 of the verification target data 40 generated in step SP21 (SP23).

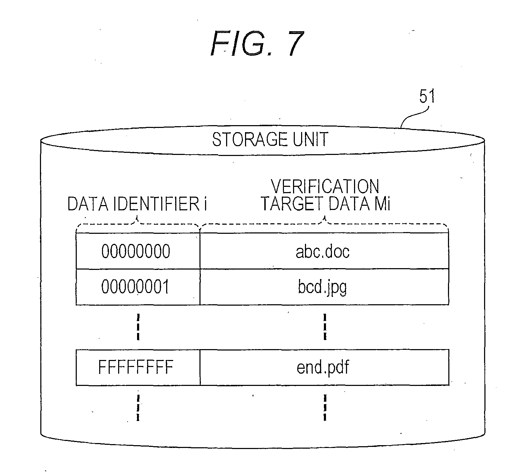

On the other hand, when the overall processing unit 60 (FIG. 4) of the service providing server 3 receives the verification target data 40 and the data identifier 42 via the communication unit 54 (SP24), the verification target data 40 and the data identifier 42 are associated and stored in the storage unit 51 as illustrated in FIG. 7 (SP25). Also, the overall processing unit 60 transmits, to the user terminal 2 via the communication unit 54, a registration process result indicating whether the verification target data 40 and the data identifier 42 are normally registered (normally registered in the storage unit 51) (SP26).

The overall processing unit 30 in the user terminal 2 receives the registration process result via the communication unit 24 and determines based on the registration process result whether the verification target data 40 and the data identifier 42 are successfully registered to the service providing server 3 (SP27). In the case where the overall processing unit 30 determines that the registration of the verification target data 40 and the data identifier 42 has been failed, a retransmission process of the verification target data 40 and the data identifier 42 is performed (SP23). In the case where the overall processing unit 30 has determined that the verification target data 40 and the data identifier 42 have been successfully registered, the overall processing unit 30 finishes the verification target data registration process.

(1-2-3) Verification Target Data Possession Verification Process

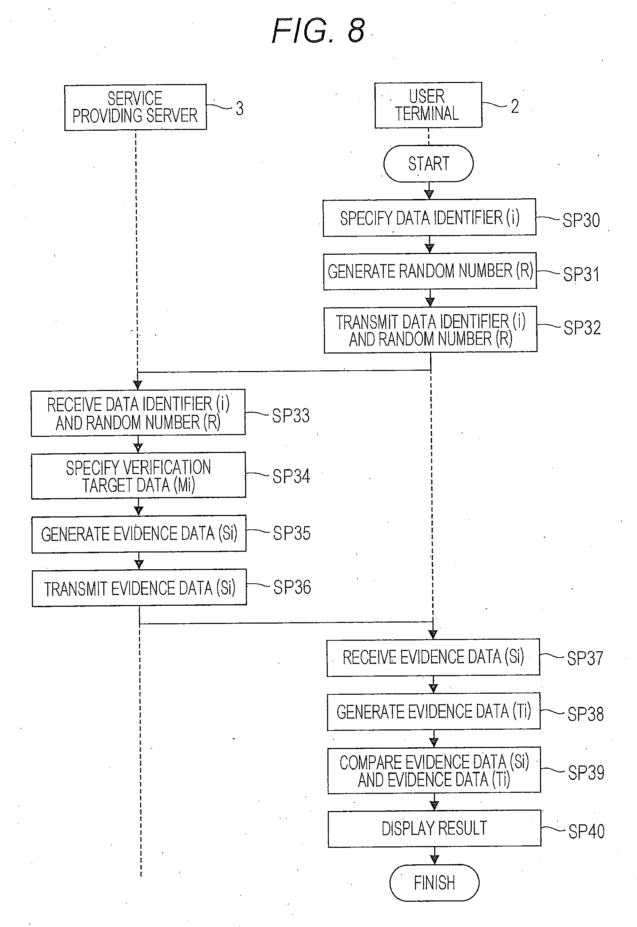

FIG. 8 illustrates a successive flow of a verification target data possession verification process according to the embodiment. The verification target data possession verification process is a process for verifying whether the service providing server 3 possesses the verification target data 40, by using the trace data 41 (FIG. 3), which has been previously generated by the user terminal 2, without transmitting the verification target data 40 (FIG. 4) by the service providing server 3.

The verification target data possession verification process is started by operating the input unit 22 of user's user terminal 2 by the user, specifying the data identifier 42 (FIG. 3) of the verification target data 40 (FIG. 3) requested by the user, and inputting an instruction for verifying whether the corresponding verification target data 40 is possessed in the service providing server 3 (hereinafter called a verification target data possession verification instruction).

Practically, the overall processing unit 30 in the user terminal 2 first provides the random number generation unit 31 (FIG. 3) with an instruction for generating a random number after the verification target data possession verification instruction, in which the data identifier 42 of the verification target data 40 is specified, is input via the input unit 22 (SP30). The random number generation unit 31 generates a random number in accordance with the instruction (SP31). Also, the overall processing unit 30 transmits, to the service providing server 3 via the communication unit 24, the random number generated by the random number generation unit 31 at this time and the data identifier 42 specified in the verification target data possession verification instruction (SP32).

On the other hand, the overall processing unit 60 in the service providing server 3 receives the random number and the data identifier 42 (FIG. 4) via the communication unit 54 and stores the random number and the data identifier 42 in the storage unit 51 (SP33). Then, the overall processing unit 30 specifies, based on the data identifier 42, the verification target data 40 (FIG. 4) to be verified that the service providing server 3 possesses the data (SP34).

Subsequently, the overall processing unit 60 provides the basic operation unit 61 (FIG. 4) with an instruction for generating evidence data (hereinafter called a server side evidence data) on the service providing server 3 side of the verification target data 40 by using the random number received in step SP33, the verification target data 40 specified in step SP34, and the public parameter 36 (FIG. 4) stored in the storage unit 51 in step SP6 in the public parameter registration process (FIG. 5).

In this manner, the basic operation unit 61, in accordance with the instruction, denotes the random number received in step SP33 as R, the verification target data specified in step SP34 as Mi, the public parameter stored in the storage unit 51 in step SP6 in the public parameter registration process as N, calculates the server side evidence data Si satisfying the following formula, and stores the calculated server side evidence data Si in the storage unit 51 (SP35).
[Mathematical Formula 2]

$$Si = R^{Mi} \bmod N \qquad\qquad \ldots\ldots(2)$$

As described above, "mod" is an operator for calculating a remainder after division. Therefore, the formula (2) represents that a remainder after dividing the Mi-th power of the random number R by the public parameter 36 is calculated as the server side evidence data Si.

Then, the overall processing unit 60 transmits the above-described server side evidence data Si stored in the storage unit 51 to the user terminal 2 via the communication unit 54 (SP36).

On the other hand, after the overall processing unit 30 in the user terminal 2 receives the server side evidence data Si via the communication unit 24 (SP37), the overall processing unit 30 provides the basic operation unit 33 with an instruction for generating evidence data on the user terminal 2 side (herein after called a user terminal side evidence data) by using the random number generated by the random number generation unit 31 in step SP31, the public parameter 36 generated by the basic operation unit 33 in step SP6 in the public parameter registration process, and the trace data 41 generated by the basic operation unit 33 in step SP22 in the verification target data registration process (FIG. 6).

In this manner, in accordance with the instruction, the basic operation unit 33 denotes the above random number as R, the above public parameter as N, and the above trace data as mi, calculates user terminal side evidence data Ti satisfying the following formula, and stores the calculated user terminal side evidence data Ti in the storage unit 21 (SP38).

[Mathematical Formula 3]

$$\mathtt{Ti\ =\ R^{Mi}modN} \qquad\qquad \ldots\ldots(3)$$

Then, the basic operation unit 33 determines whether the service providing server 3 possesses the verification target data 40 targeted at the time by comparing the server side evidence data Si received in step SP37 and the user terminal side evidence data Ti calculated in step SP38.

Specifically, the basic operation unit 33 determines whether the server side evidence data Si and the user terminal side evidence data Ti are equal by using that the following formula is established by setting k as an arbitrary integer according to Fermat's little theorem:

[Mathematical Formula 4]

$$\mathtt{R^{mi}nodN\ =\ R^{mi+k(p-1)(q-1)}modN\ =\ R^{Mi}modN} \qquad \ldots\ldots(4)$$

In the case where the basic operation unit 33 has obtained, by the determination, a determination result process that the server side evidence data Si and the user terminal side evidence data Ti have been equal, the basic operation unit 33 determines that the service providing server 3 possesses the verification target data 40 targeted at the time. In the case where the basic operation unit 33 has obtained a determination result that the server side evidence data Si and the user terminal side evidence data Ti have not been equal (different), the basic operation unit 33 determines that the service providing server 3 does not possess the verification target data 40 (SP39).

The overall processing unit 30 displays the determination result of the basic operation unit 33 on the output unit 23 (SP40), then finishes the verification target data possession verification process.

(1-3) Advantageous Effects of the Embodiment

As described above, the cloud system 1 according to the embodiment can verify whether the service providing server 3 stores the verification target data 40 on the user terminal 2 side, without transmitting the verification target data 40 (FIG. 4) from the service providing server 3. Therefore, even if a data size of the verification target data 40 is enormous, the user terminal 2 can verify with a small communication amount (just transmitting the data identifier 42 and a random number and receiving the server side evidence data Si) whether the service providing server 3 possesses the verification target data 40.

Also, in the cloud system 1 according to the embodiment, calculations by the formulae (2) and (3) are only needed in the service providing server 3 and the user terminal 2 to verify whether the service providing server 3 stores the verification target data 40, and the cloud system can verify by very simple calculations whether the service providing server 3 possesses the verification target data 40.

In this manner, the data possession verification method according to the embodiment can verify with a small communication amount or a small calculation amount whether the service providing server 3 possesses the verification target data 40 deposited to the service providing server 3 by the user terminal 2.

(1-4) Application Target of the First Embodiment

In the data possession verification method according to the first embodiment, for example, a user can validate that an electronic document storage service provider providing a service for storing an electronic document (data) does not lose an electronic document deposited by the user. Specifically, by setting an electronic document deposited to the electronic document storage service provider as the verification target data 40 and preliminary preparing the trace data 41 of the verification target data 40 by a user, the user can validate that the electronic document is stored in the electronic document storage service provider.

Also, the data possession verification method according to the embodiment is not applied only to an electronic document storage service provider. For example, the method can be applied to a process that a local government validates that an administrative document is certainly stored as well.

Furthermore, the local government sometimes transfers, to a public archives office, an administrative document worthwhile storing after expiry of the storage period thereof. Therefore, the data possession verification method according to the embodiment can be applied for validating a storage state in the public archives office.

The data possession verification method according to the embodiment can be also applied to an electronic authentication service in a notary public office. Specifically, the notary public office stores an official document by request from such as a commissioned person. Therefore, the notary public office can validate possession of the official document by preliminary preparing trace data of the official document by such as the commissioned person.

(2) Second Embodiment

The data possession verification method according to the above-described first embodiment can unlimitedly verify whether the service providing server 3 possesses the verification target data 40. However, a modular operation is needed in the user terminal 2 and the service providing server 3, and a heavy load is applied to the user terminal 2 or the service providing server 3 having low calculation capability.

In the embodiment, the data possession verification method will be described in which the verification whether the service providing server 3 possesses verification target data can be performed with a small calculation amount although the frequency to verify whether the service providing server 3 possesses verification target data is limited.

(2-1) Configuration of the Cloud System According to the Embodiment

In FIG. 1, 70 denotes a cloud system according to the second embodiment as a whole. The cloud system 70 includes a user terminal 71 including, for example, a cell phone and a personal computer, and a service providing server 72 of a cloud service operator. These are connected via the network 4. Hardware configurations of the user terminal 71 and the service providing server 72 are similar to those in the first embodiment. Therefore, description thereof will be omitted herein.

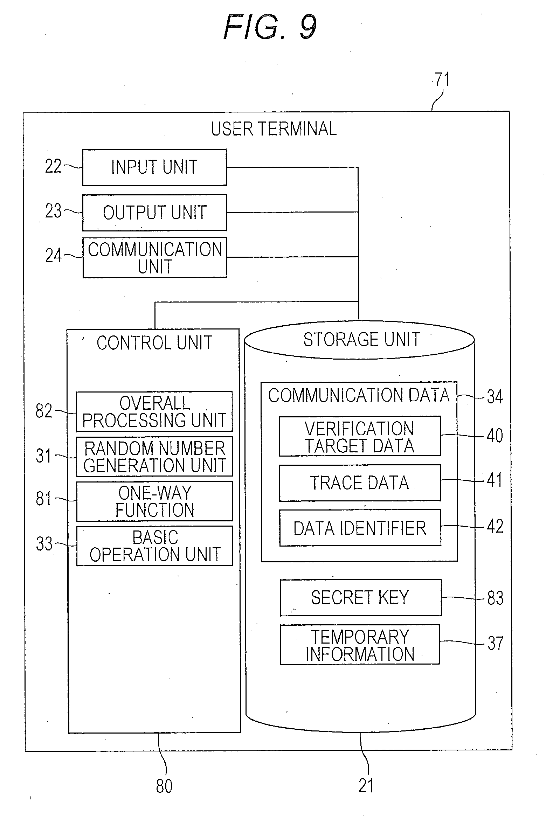

FIG. 9, in which the same signs as FIG. 3 are used in corresponding portions, illustrates a logical configuration of the user terminal 71 according to the second embodiment. As is obvious from FIG. 9, the user terminal 71 according to the embodiment is configured similar to the user terminal 2 (FIG. 3) according to the first embodiment except that a one-way function 81 instead of the prime number generation unit 32 (FIG. 3) is included in a control unit 80 and the public parameter 36 (FIG. 3) is not stored in the storage unit 21.

The one-way function 81 is a function to embody a corresponding program, in which the CPU 11 (FIG. 2) of the user terminal 71 is stored in the memory 12 (FIG. 2), by executing the program, and performs a process by a unidirectional function with respect to verification target data 40 in response to an instruction from an overall processing unit 82. The unidirectional function is a function difficult to calculate an input value from an output value of the function. In general, a cryptographic hash function, a public key encryption function (a secret key is confidential), and a secret key encryption function (a secret key is confidential) are included in the unidirectional function.

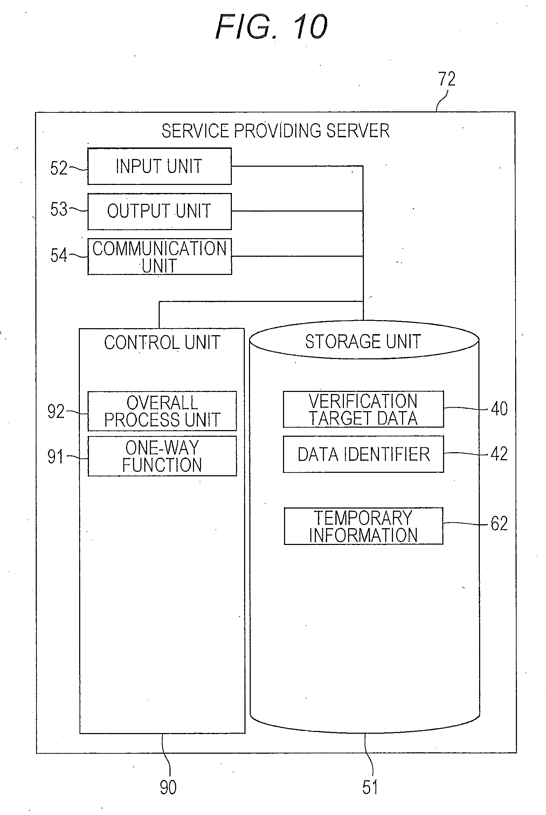

FIG. 10, in which the same signs as FIG. 4 are used in corresponding portions, illustrates a service providing server 72 according to the second embodiment. As is obvious from FIG. 10, the service providing server 72 according to the embodiment is configured similar to the service providing server 3 according to the first embodiment except that a one-way function 91 is included in a control unit 90 instead of the basic operation unit 33 (FIG. 4) and the public parameter 36 (FIG. 4) is not stored in the storage unit 51. The one-way function 91 is a function to embody a corresponding program, in which the CPU 11 (FIG. 2) of the service providing server 72 is stored in the memory 12 (FIG. 2), by executing the program, and includes a function similar to the one-way function 81 of the user terminal 71.

(2-2) Data possession Verification Method According to the Embodiment

A data possession verification method according to the embodiment is realized by a secret key registration process for preliminarily registering multiple secret keys to the service providing server 72, a verification target data registration process for depositing the verification target data 40 to the service providing server 72, and then a verification target data possession verification process for verifying that the verification target data 40 is possessed in the service providing server 72. The public parameter registration process, the verification target data registration process, and the verification target data possession verification process will be described below.

(2-2-1) Secret Key Registration Process

The secret key registration process is started by inputting secret key setting information and a quantity of secret keys to be prepared by operating an input unit 22 of user's user terminal 71 by the user and inputting a registration instruction of the secret key to the service providing server 72 (hereinafter called a secret key registration instruction).
Practically, after the secret key registration instruction is input via the input unit 22, the overall processing unit 82 (FIG. 9) of the user terminal 71 provides a random number generation unit 31 with an instruction for preparing secret keys of a quantity specified in the secret key registration instruction. In this manner, the random number generation unit 31 generates random numbers (k1 to kn) of a specified quantity in accordance with the instruction. Each. of the random numbers generated in the random number generation unit 31 is stored in the storage unit 21 as a secret key 83 (FIG. 9) .

(2-2-2) Verification Target Data Registration Process

The verification target data registration process in the data possession verification method according to the embodiment is similar to the verification target data registration process according to the first embodiment described above regarding FIG. 6 except that a method for generating the trace data 41 in step SP22 is different.
Practically, in the case of the data possession verification method, in step SP22 in the verification target data registration process, the overall processing unit 82 (FIG. 9) provides the basic operation unit 33 with an instruction for generating the trace data 41 of the verification target data 40 specified in the verification target data registration instruction received in the step SP20. In accordance with the instruction, the basic operation unit 33 selects one unused secret key 83 from among the multiple secret keys 83 generated in the above-described secret key registration process, and calculates the trace data 41 satisfying the following formula by denoting the selected secret key 83 as kj (j = 1 to n), the verification target data 40 as Mi, and the trace data 41 as mi. The calculated trace data 41 is stored in the storage unit 21.
[Mathematical Formula 5]

$$mi = Func(Mi||kj) \qquad\qquad ......(5)$$

"Func" is an operator denoting a unidirectional function, and "II" is an operator denoting a coupling value of adjacent values. Specifically, "Mi||kj" represents data in which a value of "Mi" is an upper value and a value of "kj" is a lower value. Therefore, the formula 5 represents that an output value of the unidirectional function Func, in which a coupling value of a value of the verification target data 40 and a value of the secret key kj is an input, is calculated as the trace data 41.
In the case of the data possession verification method, process contents other than the above in the verification target data registration process are similar to the process contents in the verification target data registration process according to the first embodiment described above regarding FIG. 6. Therefore descriptions other than the above will be omitted.

(2-2-3) Verification Target Data possession Verification Process

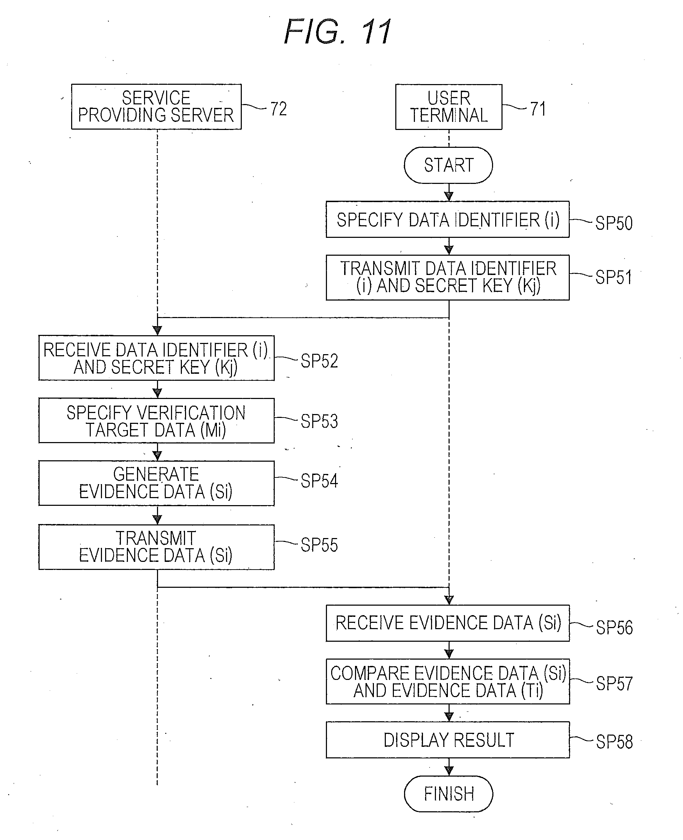

FIG. 11 illustrates a successive flow of the verification target data possession verification process according to the embodiment. The verification target data possession verification process is a process for verifying whether the service providing server 72 possesses the verification target data 40, by using the trace data 41 (FIG. 9) previously generated by the user terminal 71 without transmitting the verification target data 40 by the service providing server 72.
The verification target data possession verification process is started by operating the input unit 22 of user' s user terminal 71 by the user, specifying a data identifier 42 of the verification target data 40 requested by the user, and inputting an instruction for verifying whether the corresponding verification target data 40 is possessed in the service providing server 72 (hereinafter called a verification target data possession verification instruction).
Practically, when the verification target data possession verification instruction specifying the data identifier 42 of the verification target data 40 is input via the input unit 22 (SP50), the overall processing unit 82 (FIG. 9) of the user terminal 71 transmits, to the service providing server 72 via a communication unit 24, the data identifier 42 specified in the verification target data possession verification instruction and the secret key 83 used for generating the trace data 41 of the verification target data 40 when the verification target data 40 corresponding to the data identifier 42 is registered to the service providing server 72 (SP51).
On the other hand, the overall processing unit 92 (FIG. 10) of the service providing server 72 receives the data identifier 42 and the secret key 83 via the communication unit 54 and stores the data identifier 42 and the secret key 83 in the storage unit 51 (SP52). Then, the overall processing unit 92 specifies, based on the data identifier 42, the verification target data 40 to be verified that the service providing server 72 possesses the data (SP53).

Subsequently, the overall processing unit 92 provides the one-way function 91 with an instruction for generating evidence data (hereinafter called server side evidence data) on the service providing server 72 side of the verification target data 40 by using the secret key 83 received in step SP52 and the verification target data 40 specified in step SP53. In this manner, the one-way function 91, in accordance with the instruction, denotes the secret key 83 received in step SP52 as kj and the verification target data 40 specified in step SP53 as Mi, calculates the server side evidence data Si satisfying the following formula, and stores the calculated server side evidence data Si in the storage unit 51 (SP54).
[Mathematical Formula 6]

$$Si = Func(Mi||kj) \qquad\qquad ......(6)$$

Then, the overall processing unit 92 transmits the above-described server side evidence data Si stored in the storage unit 51 to the user terminal 71 via the communication unit 54 (SP55).

On the other hand, the overall processing unit 82 (FIG. 9) of the user terminal 71 receives the server side evidence data Si via the communication unit 24 (SP56), and provide the basic operation unit 33 with an instruction for comparing the trace data 41 of the verification target data 40 targeted at this time and the server side evidence data Si received in step SP56. In this manner, the basic operation unit 33 reads out the trace data 41 from the storage unit 21 in accordance with the instruction and, by setting the read trace data 41 as evidence data Ti on the user terminal 71 side (user terminal side evidence data), compares the user terminal side evidence data Ti and the server side evidence data Si received in step SP56.

In the case where the server side evidence data Si and the user terminal side evidence data Ti are equal, the basic operation unit 33 determines that the service providing server 72 possesses the verification target data 40 targeted at the time. In the case where the server side evidence data Si and the user terminal side evidence data Ti are not equal (different), the basic operation unit 33 determines that the service providing server 72 does not possess the verification target data 40 (SP57).

The overall processing unit 82 displays a determination result of the basic operation unit 33 on the output unit 23 (SP58), then finishes the verification target data possession verification process.

(2-3) Advantageous Effects of the Embodiment

As described above, the cloud system 70 according to the embodiment can verify on the user terminal 71 side whether the service providing server 3 possesses the verification target data 40, without transmitting the verification target data 40 (FIG. 10) from the service providing server 72 as with the first embodiment.

Also, in the cloud system 70 according to the embodiment, calculations by the formulae (5) and (6) are only needed in the user terminal 71 and the service providing server 72 to verify whether the service providing server 72 possesses the verification target data 40, and the cloud system 70 can verify by very simple calculations weather the service providing server 72 possesses the verification target data 40.

In this manner, according to the data possession verification method according to the embodiment, the verification whether the service providing server 72 possesses the verification target data 40 deposited to the service providing server 72 by the user terminal 71 can be performed with a small communication amount or a small calculation amount.

The data possession verification method according to the embodiment significantly differs from the data possession verification method according to the first embodiment in the point that the user terminal 71 transmits the secret key 83, instead of a random number, when the service providing server 72 generates the server side evidence data Si.

In this case, as with basically transmitting different random number each time in the data possession verification method according to the first embodiment, the user terminal 71 needs to transmit the secret key 83, of which value is different each time, to the service providing server 72 in the data possession verification method according to the second embodiment. Otherwise, even if the service providing server 72 does not possess the verification target data 40, by reusing the server side evidence data Si, the service providing server 72 can falsely report to the user terminal 71 that the service providing server 72 possesses the verification target data 40. Therefore, in the data possession verification method according to the second embodiment, the verification whether the service providing server 72 possesses the verification target data 40 can be performed for the times corresponding to the number of the secret keys 83 generated in the secret key registration process.

(3) Third Embodiment

In the verification target data possession verification method according to the first embodiment and the verification target data possession verification method according to the second embodiment, to verify whether the service providing servers 3, 72 possess the verification target data 40, the user terminals 2, 71 need to possess the trace data 41 for each verification target data 40. Therefore, the trace data 41 need to be shared among multiple user terminals 2, 71 to enable the multiple user terminals 2, 71 to verify whether the service providing servers 3, 72 possess the same verification target data 40.

However, in the case whether the trace data 41 are shared among multiple user terminals 2, 71, all trace data 41 of the verification target data 40 possessed in each user terminal 2, 71 need to be updated as well every time the verification target data 40 is updated, and therefore it takes too much effort to actually apply it.

On the other hand, in the existing technique disclosed in NPL 1, both of the user terminals 2, 71 and the service providing servers 3, 72 need to handle an enormous amount of calculations called a modular exponentiation with a high calculation load.

A verification data possession verification method according to the third embodiment will be described below, in which the user terminals 2, 71 and the service providing servers 3, 72 can verify whether the service providing servers 3, 72 possess the verification target data 40, without possessing the trace data 41 in the user terminals 2, 71 and by a much less number of modular exponentiations in comparison with the existing technique disclosed in NPL 1

(3-1) Configuration of the Cloud System According to the Embodiment

In FIG. 1, 100 denotes a cloud system according to the third embodiment as a whole. The cloud system 100 includes a user terminal 101 including, for example, a cell phone and a personal computer and a service providing server 102 of a cloud service operator. These are connected via a network 4. A hardware configuration of the user terminal 101 and the service providing server 102 is similar to that of the first embodiment. Therefore, description thereof will be omitted herein.

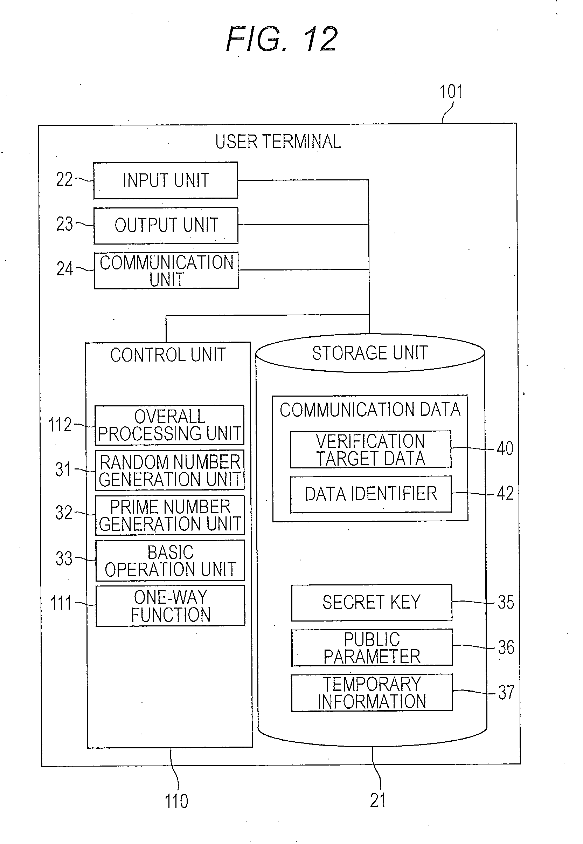

FIG. 12, in which the same signs as FIG. 3 are used in corresponding portions, illustrates a logical configuration of the user terminal 101 according to the third embodiment. As is obvious from FIG. 12, the user terminal 101 according to the embodiment is configured similar to the user terminal 2 (FIG. 3) according to the first embodiment except that a one-way function 111 is included in a control unit 110 and the trace data 41 (FIG. 3) of the verification target data 40 deposited to the service providing server 102 is not stored in a storage unit 21.

The one-way function 111 is a function to embody a corresponding program in which the CPU 11 (FIG. 2) of the user terminal 101 is stored in the memory 12 (FIG. 2). The unidirectional function includes a function similar to the one-way function 81 according to the second embodiment described above regarding FIG. 9. Therefore, detailed description thereof will be omitted.

In FIG. 4, 102 denotes a service providing server according to the third embodiment. The service providing server 102 is configured similar to the service providing server 3 according to the first embodiment except that process contents of each process performed by an overall processing unit 121 in a control unit 120 differ from the process contents performed by the overall processing unit 60 according to the first embodiment. The overall processing unit 121 is a function to embody a corresponding program, in which the CPU 11 (FIG. 2) of the service providing server 102 is stored in the memory 12 (FIG. 2), by executing the program.

(3-2) Data possession Verification Method According to the Embodiment

A data possession verification method according to the embodiment will be described next. As with the data possession verification method according to the first embodiment, the data possession verification method according to the embodiment is realized by a public parameter registration process for preliminarily registering the public parameter 36 to the service providing server 102, a verification target data registration process for depositing the verification target data 40 to the service providing server 102, and then a verification target data possession verification process for verifying that the verification target data 40 is possessed in the service providing server 102. The public parameter registration process, the verification target data registration process, and the verification target data possession verification process will be described below.

(3-2-1) Public Parameter Registration Process

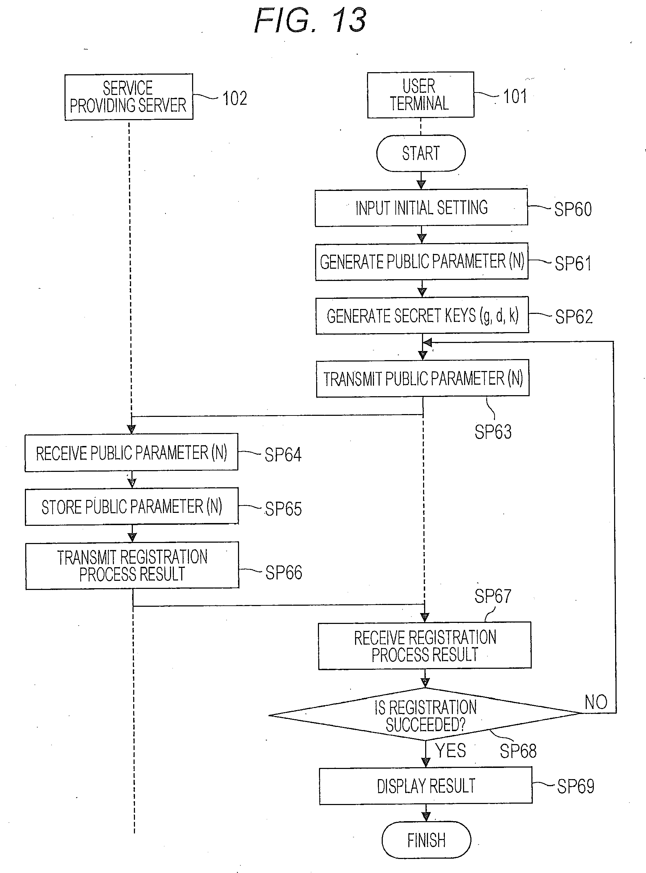

FIG. 13 illustrates a successive flow of a public parameter registration process according to the embodiment. The public parameter registration process is a process preliminarily performed to share a public parameter 36 (FIG. 12) between the user terminal 101 and the service providing server 102 so as to verify whether the service providing server 102 stores the verification target data 40 (FIG. 12) deposited to the service providing server 102.

The public parameter registration process is started by inputting setting information on a secret key and a public parameter by operating the input unit 22 of user's user terminal 101 by the user, and by inputting a registration instruction of the public parameter to the service providing server 102 (hereinafter called a public parameter registration instruction).

Practically, the overall processing unit 112 (FIG. 12) of the user terminal 101 first provides the prime number generation unit 32 with an instruction for generating a prime number after the public parameter registration instruction is input via the input unit 22 (SP60). In this manner, the prime number generation unit 32 generates two prime numbers (p and q) in accordance with the instruction. The overall processing unit 112 provides the basic operation unit 33 (FIG. 12) with an instruction for calculating the two prime numbers p, q generated by the prime number generation unit 32 and a product of the two prime numbers p, q. In this manner, the basic operation unit 33 calculates a product of the two prime numbers p, q in accordance with the instruction. The overall processing unit 112 stores the product of the two prime numbers p, q calculated by the basic operation unit 33 in the storage unit 21 as the public parameter 36 (FIG. 12) (SP61).

Subsequently, the overall processing unit 112 provides the random number generation unit 31 (FIG. 12) with an instruction for generating two random numbers of 0 or more but less than N by setting the public parameter 36 generated in step SP61 as N. In this manner, the random number generation unit 31 generates two random numbers (g and d) in accordance with the instruction. The overall processing unit 112 stores, to the storage unit 21, the two random numbers generated by the random number generation unit 31 as secret keys g, d. Also the overall processing unit 112 calculates an inverse element e of the secret key d satisfying the following formula and stores the calculated inverse element e of the secret key d in the storage unit 21:

[Mathematical Formula 7]

$$ed = 1modN \qquad\qquad ......(7)$$

Furthermore, the overall processing unit 112 provides the random number generation unit 31 with an instruction for generating a random number. In this manner, the random number generation unit 31 generates a random number (k) in accordance with the instruction. The overall processing unit 112 stores the random number, which has been generated by the random number generation unit 31, as a secret key k in the storage unit 21 (SP62).

Then, the overall processing unit 112 transmits the public parameter 36, which has been generated in step SP61, to the service providing server 102 via the communication unit 24 (FIG. 12) (SP63).

On the other hand, when the overall processing unit 121 (FIG. 4) of the service providing server 102 receives the public parameter 36 via the communication unit 54 (SP64), the overall processing unit 121 stores the public parameter 36 in the storage unit 51 (SP65). Also, the overall processing unit 112 transmits, to the user terminal 101 via the communication unit 54, a registration process result indicating whether the public parameter 36 is normally registered (normally stored in the storage unit 51) (SP66).

When the overall processing unit 112 of the user terminal 101 receives the registration process result via the communication unit 24 (SP67), the overall processing unit 112 determines based on the registration process result whether the public parameter 36 is successfully registered to the service providing server 102 (SP68). The overall processing unit 112 performs a retransmission process for the public parameter 36 in the case where the overall processing unit 112 has determined that the registration of the public parameter 36 has been failed (SP63). In the case where the overall processing unit 112 has determined that the public parameter 36 has been successfully registered, the overall processing unit 112 finishes the public parameter registration process.

(3-2-2) Verification Target Data Registration Process

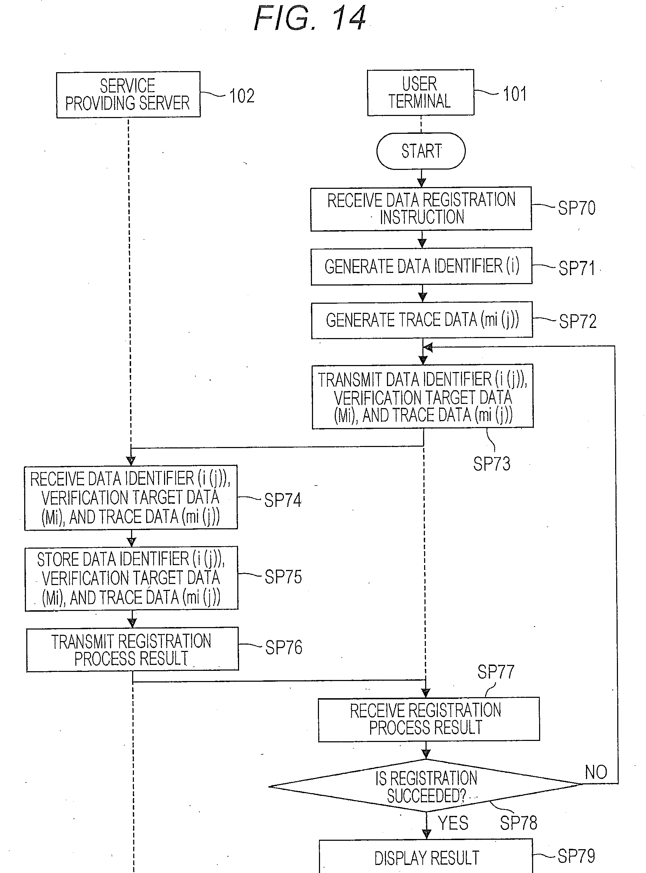

FIG. 14 illustrates a successive flow of a verification target data registration process according to the embodiment. The verification target data registration process is a process for generating trace data for each verification target data 40 and depositing the generated trace data to the service providing server 3 with the verification target data 40 so that the user terminal 101 can verify later on whether the service providing server 102 possesses the verification target data 40 (FIG. 12).

The verification target data registration process is started by operating the input unit 22 of user' s user terminal 101 (FIG. 12) by the user, specifying verification target data 40 requested from among the verification target data 40 stored in the storage unit 21 of the user terminal 101, and inputting an instruction for registering the verification target data 40 to the service providing server 102 (hereinafter called a verification target data registration instruction).

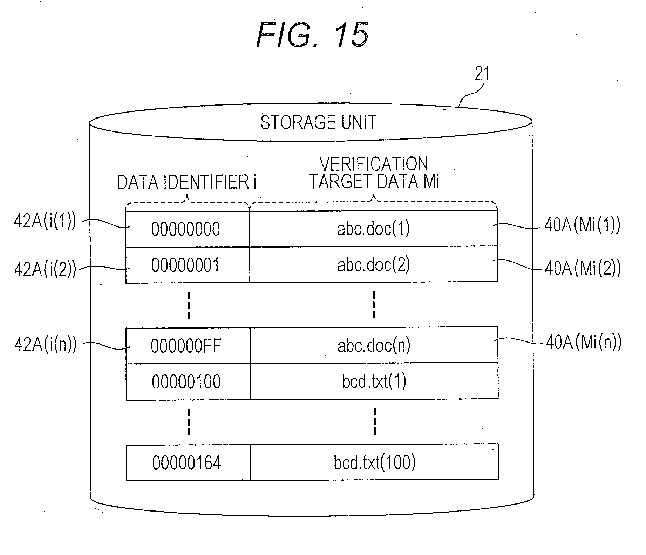

Practically, after the verification target data registration instruction is input via the input unit 22 (SP70), the overall processing unit 112 (FIG. 12) of the user terminal 101 first generates a data identifier 42 of the verification target data 40 specified in the verification target data registration instruction (SP71). Specifically, the overall processing unit 112, as illustrated in FIG. 15, divides the verification target data 40, which is a registration target and configured by one document, by a predetermined unit (for example, divided for each OS file system such as 4, 8, 32 or 64 [kbyte]) and generates a data identifier 42A for each divided data 40A of the verification target data 40 obtained in this manner. The overall processing unit 112 stores, in the storage unit 21 (FIG. 12), the data identifier 42A of each divided data 40A of the verification target data 40 generated in this manner (SP71).

Subsequently, the overall processing unit 112, with respect to the basic operation unit 33 (FIG. 12), reads out, from the storage unit 21, the public parameter 36 (FIG. 12) stored in the storage unit 21 in step SP61 in the public parameter registration process (FIG. 13), the two secret keys g, d stored in the storage unit 21 in step SP62 in the public parameter registration process, and all divided data 40A of the verification target data 40 to be registered. Also, by using the read public parameter 36 and the read two secret keys g, d, the overall processing unit 112 denotes the public parameter 36 as N, each divided data 40A of the verification target data 40 as Mi(j) (J = 1 to n), and trace data for each of the divided data 40A as mi(j) (j = 1 to n), and calculates trace data for each divided data 40A of the verification target data 40 satisfying the following formula. The calculated trace data (mi(j) (j = 1 to n)) are stored in the storage unit 21 (SP72).
[Mathematical Formula 8]

$$mi(j) = Exp(g, Mi(j)d + Func(k||j)d)modN \qquad \ldots\ldots(8)$$

As described above, "mod" is an operator for calculating a remainder after division. "Func" is a unidirectional function. Also, "||" is an operator indicating coupling of adjacent values. Therefore, "k||j" represents data in which a value of "k" is a upper value and a value of "j" is a lower value. "Exp" is an operator indicating a modular exponential function in which a first parameter is a bottom and a second parameter is a power-law exponent. Therefore, for example, "Exp (2, 3)" represents the cube of 2 (= 8), and "Exp (3, 4)" represents the fourth power of 3 (= 81).

Then, the overall processing unit 112 transmits, to the service providing server 102 via the communication unit 24, the verification target data 40, the data identifier 42A of each divided data 40A of the verification target data 40 obtained as described above, and the trace data 41 for each of the divided data 40A (SP73).

On the other hand, when the overall processing unit 121 (FIG. 4) of the service providing server 102 receives, via the communication unit 54 (FIG. 4), the verification target data 40, the data identifier 42A for each divided data 40A of the verification target data 40, and trace data for each of the divided data 40A (SP74), the overall processing unit 121 stores these data in the storage unit 51 (FIG. 4) (SP75). In this case, the overall processing unit 121 associates each data identifier 42A with corresponding trace data and stores them in the storage unit 51 (SP75).

Then, the overall processing unit 121 transmits, to the user terminal 101 via the communication unit 54 (FIG. 4), a registration process result indicating whether the verification target data 40, the data identifier 42A for each data identifier 40A of the verification target data 40, and trace data for each of the divided data 40A are normally registered (normally registered in a storage unit) (SP76).

When the overall processing unit 112 (FIG. 12) of the user terminal 101 receives the registration process result via the communication unit 24 (FIG. 12) (SP77), the overall processing unit 112 determines based on the registration process result whether the verification target data 40, the data identifier 42A for each divided data 40A of the verification target data 40, and trace data for each of the divided data 40A are successfully registered to the service providing server 102 (SP78). In the case where the overall processing unit 112 has determined that the registration has been failed, the overall processing unit 112 performs the retransmission process for the verification target data 40, the data identifier 42A for each divided data 40A of the verification target data 40, and trace data for each of the divided data 40A (SP73). In the case where the overall processing unit 112 has determined that the registration has succeeded, the overall processing unit 112 finishes the verification target data registration process.

In the existing technique disclosed in NPL 1, a process for sharing a public parameter and a process procedure for registering verification target data are almost same as the public parameter registration process and the verification target data registration process according to the embodiment, except for a method for generating the trace data (mi(j)) for each divided data 40A of the verification target data 40 in the verification target data registration process. Specifically, in the existing technique, the trace data (mi(j)) for each divided data 40A of the verification target data 40 is each generated in accordance with the following formula.
[Mathematical Formula 9]

$$mi(j) = Exp(g, Mi(j)d) + Func(k||j)dmodN \qquad \ldots\ldots(9)$$

Although calculation formulae of the formulae (8) and (9) are different, a modular exponentiation with the highest calculation load is performed once in the both of them. Therefore, the calculation amount of the formula (8) and the calculation amount of the formula (9) are almost the same, and data size is considered to be almost the same. Therefore, in the verification target data registration process according to the embodiment, a calculation amount required to the user terminal 101 and the service providing server 102 can be considered to be the same amount as the existing technique disclosed in NPL 1.

(3-2-3) Verification Target Data possession Verification Process

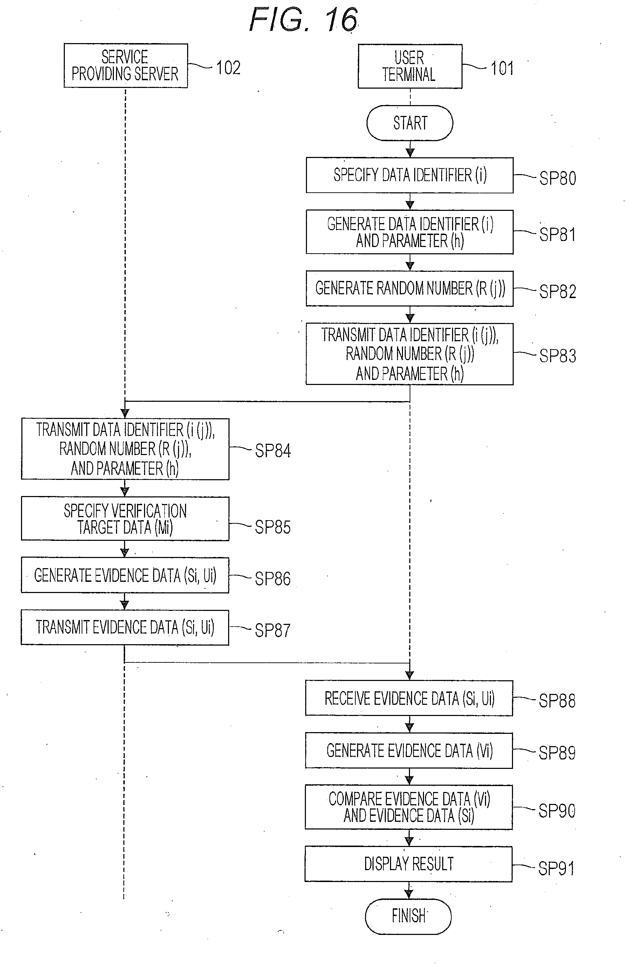

FIG. 16 illustrates a successive flow of a verification target data possession verification process according to the embodiment. The verification target data possession verification process is a process for verifying whether the service providing server 102 possesses the verification target data 40 by using trace data for each divided data 41A of the verification target data 40 which has been previously generated by the user terminal 101 and without transmitting the verification target data 40 by the service providing server 102.

The verification target data possession verification process is started by operating the input unit 22 of user's user terminal 101 (FIG. 12) by the user, specifying the data identifier 42 of the verification target data 40 requested by the user, and inputting an instruction for verifying whether the corresponding verification target data 40 is possessed in the service providing server 102 (hereinafter called a verification target data possession verification instruction).

When the verification target data possession verification instruction, in which the data identifier 42 of the verification target data 40 has been specified, is input via the input unit 22 (SP80), the overall processing unit 112 (FIG. 12) in the user terminal 101 first provides a one-way function 111 with an instruction for generating the data identifier 42A for each divided data 40A of the verification target data 40. In accordance with the instruction, by using the secret key k stored in the storage unit 21 in step SP62 in the public parameter registration process (FIG. 13), the one-way function 111 denotes the data identifier 42A for each divided data 40A of the verification target data 40 as i(j) and calculates each of the data identifier 42A for each divided data 40A of the verification target data 40 by the following formula.
[Mathematical Formula 10]

$$i(j) = Func(k||j) \qquad \ldots\ldots(10)$$

Also, the overall processing unit 112 provides the random number generation unit 31 with an instruction for generating a random number. In this manner, the random number generation unit 31 generates a random number t of 0 or more but less than p and generates a parameter h satisfying the following formula (SP81).
[Mathematical Formula 11]

$$h = g^t mod N \qquad \ldots\ldots(11)$$

In the above-described description, "p" is one of random numbers generated by the random number generation unit 31 when generating the public parameter 36 (FIG. 12) in step SP61 in the public parameter registration process described regarding FIG. 13. In the formula (11), "g" is one of random numbers generated by the random number generation unit 31 in step SP62 in the public parameter registration process, and "N" is a value of the public parameter 36 generated in step SP61 in the public parameter registration process.

Subsequently, the overall processing unit 112 provides the random number generation unit 31 with an instruction for generating a random number for each divided data 40A of the verification target data 40. In this manner, the random number generation unit 31, in accordance with the instruction, generates a random number (R(j)(j = 1 to n)) for each divided data 40A of the verification target data 40 (SP82).

Then, the overall processing unit 112 transmits, to the service providing server 102 via the communication unit 24 (FIG. 12), each of the random numbers (R(j)(j = 1 to n)) generated by the random number generation unit 31 at this time, each of the data identifiers 42A specified in the above-described verification target data possession verification instruction, and the parameter h generated in step SP81 (SP83).

On the other hand, when the overall processing unit 121 (FIG. 4) of the service providing server 102 receives, via the communication unit 54, the random numbers (R(j) (j = 1 to n)), the data identifier 42A, and the parameter h, the overall processing unit 121 stores the random numbers (R(j)(j = 1 to n)), the data identifier 42A, and the parameter h in the storage unit 51 (SP84).

Subsequently, the overall processing unit 121 reads out the data identifiers 42A of each divided data 40A of the corresponding verification target data 40 from the storage unit 51 based on the data identifier 42A received in step SP84 and specifies, based on the read data identifier 42A, each of the divided data 40A of the verification target data 40 to be verified that the service providing server 102 is possessed the data (SP85).

Then, the overall processing unit 121 provides the basic operation unit 61 (FIG. 4) with an instruction for calculating two evidence data (hereinafter called first and second server side evidence data respectively) on the service providing server 102 side of the verification target data 40 by using each divided data 40A of the verification target data 40 specified in step SP85 and the public parameter 36 stored in the storage unit 51 in step SP65 in the public parameter registration process (FIG. 13). In accordance with the instruction, values of each divided data 40A of the verification target data 40 are denoted by Mi (1) to Mi (n), the data identifiers 42A of these divided data 40A are denoted by i(1) to i(n), random numbers received by the service providing server 102 in step SP are denoted by R(1) to R(n), and the public parameter 36 stored in the storage unit 51 in step SP65 in the public parameter registration process is denoted by N. Then, the basic operation unit 61 calculates each of the first and second server side evidence data Si, Ui satisfying the following formula and stores the calculated first and second server side evidence data Si, Ui in the storage unit 51 (SP86).

[Mathematical Formula 12]

$$Si = Func(h^{R1Mi(1)+R2Mi(2)+...+RnMi(n)} mod N) \qquad ......(12)$$

[Mathematical Formula 13]

$$Ui = g^{(R1(i(1)+Mi(1))+R2(i(2)+Mi(2))+...+Rn(i(n)+Mi(n)))d} mod N \qquad ......(13)$$

In the formula (13), an exponent part represented by the following formula (14) includes multiplication and addition, and by previously calculating the exponent part, the formula (13) can be operated by one-time modular exponentiation and around n-times multiplication/addition:

[Mathematical Formula 14]

$$((R1(i(1) + Mi(1)) + R2(i(2) + Mi(2)) + ... + Rn(i(n) + Mi(n)))d \qquad ......(14)$$

In this case, a calculation amount of the addition/multiplication is low. Therefore an actual operation amount of the formula (13) is almost equal to an operation amount of one-time modular exponentiation.

Then, the overall processing unit 121 reads out the first and second server side evidence data Si, Ui, calculated as described above, from the storage unit 51 and transmits the read first and second server side evidence data Si, Ui to the user terminal 101 via the communication unit 24 (SP87).

On the other hand, after the overall processing unit 112 of the user terminal 101 receives the first and second server side evidence data Si, Ui via the communication unit 24 (SP88), the overall processing unit 112 provides the basic operation unit 33 with an instruction for generating evidence data on the user terminal 101 side (hereinafter called user terminal side evidence data) by using the random number R(j) for each divided data 40A of the verification target data 40 generated by the random number generation unit 31 in step SP82, the data identifier 42A (i(j)) for each divided data 40A of the verification target data 40 calculated in step SP81, and the public parameter 36 generated in step SP61 in the public parameter registration process (FIG. 13).

In this manner, the basic operation unit 33 calculates the first user terminal side evidence data Ti satisfying the following formula in accordance with the instruction.

[Mathematical Formula 15]

$$Ti = Uig^{-(R1i(1)+R2i(2)+...+Rni(n))d} mod N \qquad ......(15)$$

In the formula (15), an exponent part represented by the following formula (16) includes multiplication and addition, and therefore, by previously calculating the exponent part, the formula (15) can be operated by one-time modular exponentiation and around n-times multiplication/addition:

[Mathematical Formula 16]

$$(R1i(1) + R2i(2) + ... + Rni(n))d ......(16)$$

In this case, a calculation amount of addition and multiplication is low, and therefore an actual operation amount of the formula (15) is almost equal to an operation amount of one-time modular exponentiation.

$$(R1i(1) + R2i(2) + \ldots + Rni(n))d \qquad \ldots\ldots(16)$$

Also from the relationship between the formula (13) and the formula (15), the first user terminal side evidence data Ti satisfies the following formula:
[Mathematical Formula 17]

$$Ti = g^{(R1mi(1)+R2mi(2)+\ldots+Rnmi(n))d} \bmod N \qquad \ldots\ldots(17)$$

Subsequently, the basic operation unit 33 reads out, from the storage unit 21, a random number t generated by the random number generation unit 31 in step SP81 and a secret key e (inverse element of the secret key d) generated in step SP62 in the public parameter registration process (FIG. 13). Then, the basic operation unit 33 calculates the second user terminal side evidence data Vi satisfying the following formula and stores the calculated second user terminal side evidence data Vi in the storage unit 21 (SP89).
[Mathematical Formula 18]

$$Vi = Func(Ti^{te}) \qquad \ldots\ldots(18)$$

Next, the basic operation unit 33 compares the second user terminal side evidence data Vi calculated in this manner and the first server side evidence data Si received in step SP88. In the case where the second user terminal side evidence data Vi and the first server side evidence data Si are equal, the basic operation unit 33 determines that the service providing server 102 possesses the verification target data 40 targeted at the time. In the case where the first server side evidence data Si and the second user terminal side evidence data Vi are not equal (different), the basic operation unit 33 determines that the service providing server 102 does not possess the verification target data 40 (SP90).
The overall processing unit 112 displays a determination result of the basic operation unit 33 on the output unit 23, and then finishes the verification target data possession verification process.
In the above-described process procedure, although a case has been described where the first and second user terminal side evidence data Ti, Vi have been generated by using multiplication in which the public parameter 36 has been a modulus, the first and second user terminal side evidence data Ti, Vi may be generated by using addition (or subtraction) in which a public parameter is a modulus.

(3-3) Advantageous Effects of the Embodiment

In the existing technique disclosed in the above-described NPL 1, a process procedure for verifying whether the service providing server 102 possesses the verification target data 40 is similar to the verification target data possession verification process according to the embodiment. However, a part of the process contents for generating trace data based on the formula (8), not the formula (9), in step SP72 in the verification target data registration process (FIG. 14) is different.
Specifically, in the case of the existing technique disclosed in NPL 1, the server side evidence data Ui is calculated based on the following formula in step SP86 in the verification target data possession verification process (FIG. 16).
[Mathematical Formula 19]

$$Ui = (g^{R1Mi(1)+R2Mi(2)+\ldots+RnMi(n)} \times i(1)^{R1} \times i(2)^{R2} \times \ldots \times$$
$$i(n)^{Rn})^d \bmod N \qquad \ldots\ldots(19)$$

In this case, (n+1) modular exponentiations, of which bottoms are different such as $g^{R1Mi(1)+\ldots\ldots RnMi(n)}$, $i(1)^{R1}$, $i(2)^{R2}$, ......, are combined in the formula (18). Therefore, a calculation amount is around 100 times larger than that of the formula (14) capable of calculating by one-time modular exponentiation.
Also, a processing load of the user terminal 101 is high in the existing technique disclosed in NPL 1. Specifically, in step SP89 in the verification target data possession verification process (FIG. 16), the user terminal 101 calculates the first user terminal side evidence data Ti by the following formula:

[Mathematical Formula 20]

$$Ti = Ui(i(1)^{R1} \times i(2)^{R2} \times \ldots \times i(n)^{Rn})^{-d} \bmod N \qquad \ldots\ldots(20)$$

In this case, as with the formula (18), (n+1) modular exponentiations, of which bottoms are different, are combined in the formula (19). Therefore, a calculation amount thereof is around 100 times larger than that of the formula (15) capable of calculating by one-time modular exponentiation.

As is obvious from the above, a registration process of the verification target data 40 and the verification target data possession verification process for verifying whether the service providing server 102 possesses the verification target data 40, the data possession verification method according to the embodiment can verify that the service providing server 102 possesses the verification target data 40 by a much less number of modular exponentiations in comparison with the existing technique disclosed in NPL 1.

As with the first embodiment, the data possession verification method according to the embodiment can verify on a user terminal 101 side whether the service providing server 102 possesses the verification target data 40 without transmitting the verification target data 40 from the service providing server 102.

In this manner, the data possession verification method according to the embodiment can verify with a small communication amount or a small calculation amount whether the service providing server 102 possesses the verification target data 40 deposited to the service providing server 102 by the user terminal 101.

(4) Other Embodiments

In the above-described first to third embodiments, a case has been described where the present invention is applied to a cloud system configured as illustrated in FIG. 1. However, the present invention is not limited to the above, and can be widely applied to a system having other type configuration.

Also, the case has been described in the above-described first embodiment, in which the public parameter registration process, the verification target data registration process, and the data possession verification process have been performed in accordance with a process procedure illustrated in FIG. 5, 6 or 8. The case has been described in the second embodiment in which the data possession verification process has been performed in accordance with a process procedure illustrated in FIG. 11. The case has been described in the third embodiment in which the public parameter registration process, the verification target data registration process, and the data possession verification process have been respectively performed in accordance with a process procedure illustrated in FIG. 13, 14, or 15. However, the present invention is not limited to the above, and the process procedures may be changed as far as essential process contents are not changed.

Furthermore, in the above described first to third embodiments, as verification information to be used in the data possession verification process for verifying whether the service providing servers 3, 72, 102 possess data deposited from the user terminals 2, 71, 101, the case has been described in the first embodiment in which a random number has been used, the case has been described in the second embodiment in which the secret key 83 has been used, and the case has been described in the third embodiment in which a random number and the parameter h have been used. However, the present invention is not limited to the above, and other type information can be used as the verification information.

Furthermore, in the above-described first embodiment, the case has been described in which the service providing server 3 has calculated the server side evidence data Si by a modular operation in which the public parameter 36 has been a modulus and the random number R has been an exponential value of the verification target data 40 as described regarding the formula (2), and the user terminal 2 has calculated the user terminal side evidence data Ti by a modular operation in which the public parameter 36 has been a modulus and the random number R has been an exponential value of the first trace data 41 as described regarding the formula (3). However, the present invention is not limited to the above case, and for example, the server side evidence data Si and the user terminal side evidence data Ti may be calculated by using addition or subtraction by setting the public parameter 36 a modulus.

Furthermore, in the above-described second embodiment, the case has been described in which the user terminal 71, as described above regarding the formula (5), has generated the trace data 41 (the user terminal side evidence data Ti) as an output value of a unidirectional function inputting a value coupling the verification target data 40 and the secret key 83 in which the verification target data 40 is as an upper value and the secret key 83 is as a lower value, and the service providing server 72, as described regarding the formula (6), has generated the server side evidence data Si as an output value of a unidirectional function inputting a value coupling the verification target data 40 and the secret key 83 in which the verification target data 40 is as an upper value and the secret key 83 is as a lower value. However, the present invention is not limited to the above case, and output values of other operation (addition or multiplication) and other function may be input to a unidirectional function, and may be add an arbitrary operation to an output value of the unidirectional function.

Industrial Applicability

For example, the present invention can be widely applied to various configuration systems including a user terminal and a server device storing verification target data from the user terminal in addition to a cloud system performing a cloud service.

Reference Signs List

1, 70, 100 cloud system
2, 71, 101 user terminal
3, 72, 102 service providing server
11 CPU
20, 50, 80, 90, 120 control unit
35 secret key
36 public parameter
40 verification target data
40A divided data
41 trace data
42, 42A data identifier

**Claims**

1. A data possession verification system configured to verify whether a server device possesses verification target data deposited to the server device by a user terminal,
   wherein predetermined verification information is transmitted from the user terminal to the server device, and the server device calculates server side evidence data, which is specific to the verification target data and has a smaller data size than that of the verification target data, by using the possessed verification target data and the verification information, and transmits the calculated server side evidence data to the user terminal, and
   the user terminal compares user terminal side evidence data based on the verification information and the server side evidence data transmitted from the server device, and determines based on a result of the comparison whether the server device possesses the verification target data.

2. The data possession verification system according to claim 1,
   wherein the user terminal registers a public parameter to the server device in advance and generates first trace data based on the verification target data by using a first secret key when depositing the verification target data to the server device,
   the user terminal transmits a random number as the verification information to the server device,
   the server device calculates a server side evidence data by using the verification target data, the random number, and the public parameter and transmits the calculated server side evidence data to the user terminal, and
   the user terminal calculates the user terminal side evidence data based on the random number and the first trace data.

3. The data possession verification system according to claim 2,
   wherein the first secret key includes two prime numbers, and the user terminal calculates the public parameter as a product of the two prime numbers.

4. The data possession verification system according to claim 3,
   wherein the user terminal calculates the first trace data by a modular operation in which a product of a value obtained by subtracting 1 from each of the two prime numbers is a modulus, and an exponential value of the verification target data is set to 1,
   the server device calculates the server side evidence data by a modular operation in which the public parameter is a modulus, and the random number is an exponential value of the verification target data, and
the user terminal calculates the user terminal side evidence data by a modular operation in which the public parameter is a modulus, and the random number is an exponential value of the first trace data value.

5. The data possession verification system according to claim 1,
wherein the user terminal generates multiple second secret keys, generates the first trace data by using one of the multiple second secret keys when the verification target data is deposited to the server device, transmits the second secret key, which has been used when the first trace data has been generated, to the server device as the verification information, and compares the user terminal side evidence data as the first trace data and the server side evidence data transmitted from the server device.

6. The data possession verification system according to claim 5,
wherein the user terminal generates the first trace data as an output value of a unidirectional function in which a value coupling the verification target data and the second secret key, the verification target data as an upper value and the second secret key as a lower value is as an input;
the server device generates the server side evidence data as an output value of a unidirectional function in which a value coupling the verification target data and the second secret key, the verification target data as an upper value and the second secret key as a lower value is as an input, and
the user terminal determines that the server device possesses the verification target data in a case where the user terminal side evidence data and the server side evidence data are the same.

7. The data possession verification system according to claim 1,
wherein the user terminal registers a public parameter to the server device in advance,
the user terminal divides the verification target data into multiple divided data when the verification target data is deposited to the server device, generates second trace data based on the divided data for each of the divided data, and transmits the second trace data generated for each of the generated divided data to the server device with the verification target data,
the user terminal transmits, to the server device as the verification information, a parameter generated by using a third secret key and a random number for each of the divided data of the verification target data,
the server device calculates the server side evidence data by using the parameter, each of the divided data of the verification target data, the random number for each of the divided data of the verification target data, and the public parameter, and
the user terminal calculates the user terminal side evidence data by using the third secret key, and the random number for each of the divided data of the verification target data.

8. A data possession verification method for verifying whether a server device possesses verification target data deposited to the server device by a user terminal, comprising:

a first step in which the user terminal transmits predetermined verification information to the server device, and the server device calculates server side evidence data, which is specific to the verification target data and has a smaller data size than that of the verification target data, by using the possessed verification target data and the verification information, and transmits the calculated server side evidence data to the user terminal; and
a second step in which the user terminal compares user terminal side evidence data based on the verification information and the server side evidence data transmitted from the server device, and determines based on a result of the comparison whether the server device possesses the verification target data.

9. The data possession verification method according to claim 8,
wherein the user terminal registers a public parameter to the server device in advance, and generates first trace data based on the verification target data by using a first secret key when the verification target data is deposited to the server device,
the user terminal transmits a random number as the verification information to the server device,
the server device calculates server side evidence data by using the verification target data, the random number, and the public parameter, and transmits the calculated server side evidence data to the user terminal, and
the user terminal calculates the user terminal side evidence data based on the random number and the first trace data.

10. The data possession verification method according to claim 9, wherein the first secret key includes two prime numbers, and the user terminal calculates the public parameter as a product of the two prime numbers.

**11.** The data possession verification method according to claim 10,
wherein the user terminal calculates the first trace data by a modular operation in which a product of a value obtained by subtracting 1 from each of the two prime numbers is a modulus, and an exponential value of the verification target data is 1,
the server device calculates the server side evidence data by a modular operation in which the public parameter is a modulus, and the random number is an exponential value of the verification target data, and
the user terminal calculates the user terminal side evidence data by a modular operation in which the public parameter is a modulus, and the random number is an exponential value of the first trace data.

**12.** The data possession verification method according to claim 8,
wherein the user terminal generates multiple second secret keys, generates the first trace data by using one of the multiple second secret keys when the verification target data is deposited to the server device, transmits the second secret key, which has been used when the first trace data has been generated, to the server device as the verification information, and compares the user terminal side evidence data as the first trace data and the server side evidence data transmitted from the server device.

**13.** The data possession verification method according to claim 12,
wherein the user terminal generates the first trace data as an output value of a unidirectional function in which a value coupling the verification target data and the second secret key, the verification target data as an upper value and the second secret key as a lower value is as an input;
the server device generates the server side evidence data as an output value of a unidirectional function in which a value coupling the verification target data and the second secret key, the verification target data as an upper value and the second secret key as a lower value is as an input, and
the user terminal determines that the server device possesses the verification target data in a case where the user terminal side evidence data and the server side evidence data are the same.

**14.** The data possession verification system according to claim 1,
wherein the user terminal registers a public parameter to the server device in advance,
the user terminal divides the verification target data into multiple divided data when the verification target data is deposited to the server device, generates second trace data based on the divided data for each of the divided data, and transmits the second trace data generated for each of the generated divided data to the server device with the verification target data,
the user terminal transmits, to the server device as the verification information, a parameter generated by using a third secret key and a random number for each of the divided data of the verification target data,
the server device calculates the server side evidence data by using the parameter, each of the divided data of the verification target data, the random number for each of the divided data of the verification target data, and the public parameter, and
the user terminal calculates the user terminal side evidence data by using the third secret key, and the random number for each of the divided data of the verification target data.

# FIG. 1

1(70, 100)

2(71, 101)    4    3(72, 102)

| USER TERMINAL | | SERVICE PROVIDING SERVER |

# FIG. 2

2, 3(71, 72, 101, 102)

USER TERMINAL/SERVICE PROVIDING SERVER

| 11 | 12 | 13 |
|---|---|---|
| CPU | MEMORY | EXTERNAL STORAGE DEVICE |

10

14

| | | | |
|---|---|---|---|
| COMMUNICATION DEVICE | INPUT DEVICE | OUTPUT DEVICE | OUTPUT DEVICE |

15

16

17

18

## FIG. 3

2

```
USER TERMINAL

22 — INPUT UNIT

23 — OUTPUT UNIT

24 — COMMUNICATION
       UNIT
```

```
CONTROL UNIT

30 — OVERALL
       PROCESSING UNIT

31 — RANDOM NUMBER
       GENERATION UNIT

32 — PRIME NUMBER
       GENERATION UNIT

33 — BASIC
       OPERATION UNIT
```

```
STORAGE UNIT

COMMUNICATION DATA — 34

VERIFICATION
TARGET DATA — 40

TRACE DATA — 41

DATA IDENTIFIER — 42

SECRET KEY — 35

PUBLIC
PARAMETER — 36

TEMPORARY
INFORMATION — 37
```

20                    21

# FIG. 4

3(102)

SERVICE PROVIDING SERVER

52 — INPUT UNIT

53 — OUTPUT UNIT

54 — COMMUNICATION UNIT

CONTROL UNIT

60(121) — OVERALL PROCESSING UNIT

61 — BASIC OPERATION UNIT

STORAGE UNIT

VERIFICATION TARGET DATA — 40

DATA IDENTIFIER — 42

PUBLIC PARAMETER — 36

TEMPORARY INFORMATION — 62

50(120)

51

# FIG. 5

```
┌─────────────────────┐          ┌──────────────┐
│      SERVICE        │── 3      │    USER      │── 2
│  PROVIDING SERVER   │          │  TERMINAL    │
└─────────────────────┘          └──────────────┘
                                        │
                                   ( START )
                                        │
                                 ┌──────────────┐
                                 │INITIAL SETTING│── SP1
                                 └──────────────┘
                                        │
                                 ┌──────────────┐
                                 │  GENERATE    │── SP2
                                 │SECRET KEY (p, q)│
                                 └──────────────┘
                                        │
                                 ┌──────────────┐
                                 │GENERATE PUBLIC│── SP3
                                 │PARAMETER (N) │
                                 └──────────────┘
                                        │
                                 ┌──────────────┐
                                 │TRANSMIT PUBLIC│
                                 │PARAMETER (N) │
                                 └──────────────┘
                                        │  SP4
      ┌─────────────────┐
      │RECEIVE PUBLIC   │── SP5
      │PARAMETER (N)    │
      └─────────────────┘
              │
      ┌─────────────────┐
      │STORE PUBLIC     │── SP6
      │PARAMETER (N)    │
      └─────────────────┘
              │
   ┌───────────────────────┐
   │TRANSMIT REGISTRATION  │── SP7
   │PROCESS RESULT         │
   └───────────────────────┘
                                      SP8
                                 ┌──────────────────┐
                                 │RECEIVE REGISTRATION│
                                 │PROCESS RESULT     │
                                 └──────────────────┘
                                        │
                                   ◇─────────────◇   NO
                                   │IS REGISTRATION│─────
                                   │ SUCCEEDED?   │
                                   ◇─────────────◇  SP9
                                        │ YES
                                 ┌──────────────┐
                                 │DISPLAY RESULT│── SP10
                                 └──────────────┘
                                        │
                                   ( FINISH )
```

# FIG. 6

```
┌─────────────────────┐                    ┌─────────────────────┐
│      SERVICE        │── 3                │       USER          │── 2
│ PROVIDING SERVER    │                    │     TERMINAL        │
└─────────────────────┘                    └─────────────────────┘
          ┊                                           ┊
          ┊                                      ┌─────────┐
          ┊                                      │  START  │
          ┊                                      └─────────┘
          ┊                                           │
          ┊                                 ┌──────────────────────┐
          ┊                                 │    RECEIVE DATA       │── SP20
          ┊                                 │REGISTRATION INSTRUCTION│
          ┊                                 └──────────────────────┘
          ┊                                           │
          ┊                                 ┌──────────────────────┐
          ┊                                 │ GENERATE DATA IDENTIFIER (i) │── SP21
          ┊                                 └──────────────────────┘
          ┊                                           │
          ┊                                 ┌──────────────────────┐
          ┊                                 │ GENERATE TRACE DATA (mi) │── SP22
          ┊                                 └──────────────────────┘
          ┊                                           │
          ┊                                 ┌──────────────────────┐
          ┊                                 │ TRANSMIT DATA IDENTIFIER (i) AND │
          ┊                                 │ VERIFICATION TARGET DATA (Mi)    │
          ┊                                 └──────────────────────┘
          ┊                                           │  SP23
┌──────────────────────┐                              │
│TRANSMIT DATA IDENTIFIER (i) AND│── SP24              │
│VERIFICATION TARGET DATA (Mi)   │                     │
└──────────────────────┘                              │
          │                                           │
┌──────────────────────┐                              │
│STORE DATA IDENTIFIER (i) AND│── SP25                 │
│VERIFICATION TARGET DATA (Mi)│                        │
└──────────────────────┘                              │
          │                                           │
┌──────────────────────┐                              │
│ TRANSMIT REGISTRATION │── SP26                       │
│   PROCESS RESULT      │                              │
└──────────────────────┘                              │
          │                                      SP27  │
          └──────────────────────────────────────┐    │
                                          ┌──────────────────────┐
                                          │ RECEIVE REGISTRATION  │
                                          │   PROCESS RESULT      │
                                          └──────────────────────┘
                                                    │
                                          ◇─────────────────────◇  NO
                                          │IS REGISTRATION SUCCEEDED?│────
                                          ◇─────────────────────◇
                                                  │ YES    SP28
                                          ┌──────────────────────┐
                                          │    DISPLAY RESULT     │── SP29
                                          └──────────────────────┘
                                                    │
                                              ┌─────────┐
                                              │ FINISH  │
                                              └─────────┘
```

## FIG. 7

51

| STORAGE UNIT | |
|---|---|
| DATA IDENTIFIER i | VERIFICATION TARGET DATA Mi |
| 00000000 | abc.doc |
| 00000001 | bcd.jpg |
| ⋮ | ⋮ |
| FFFFFFFF | end.pdf |
| ⋮ | ⋮ |

## FIG. 8

SERVICE PROVIDING SERVER ~3

USER TERMINAL ~2

START

SPECIFY DATA IDENTIFIER (i) —SP30

GENERATE RANDOM NUMBER (R) —SP31

TRANSMIT DATA IDENTIFIER (i) AND RANDOM NUMBER (R) —SP32

RECEIVE DATA IDENTIFIER (i) AND RANDOM NUMBER (R) —SP33

SPECIFY VERIFICATION TARGET DATA (Mi) —SP34

GENERATE EVIDENCE DATA (Si) —SP35

TRANSMIT EVIDENCE DATA (Si) —SP36

RECEIVE EVIDENCE DATA (Si) —SP37

GENERATE EVIDENCE DATA (Ti) —SP38

COMPARE EVIDENCE DATA (Si) AND EVIDENCE DATA (Ti) —SP39

DISPLAY RESULT —SP40

FINISH

# FIG. 9

USER TERMINAL — 71

22 — INPUT UNIT

23 — OUTPUT UNIT

24 — COMMUNICATION UNIT

CONTROL UNIT

82 — OVERALL PROCESSING UNIT

31 — RANDOM NUMBER GENERATION UNIT

81 — ONE-WAY FUNCTION

33 — BASIC OPERATION UNIT

STORAGE UNIT

COMMUNICATION DATA — 34

VERIFICATION TARGET DATA — 40

TRACE DATA — 41

DATA IDENTIFIER — 42

SECRET KEY — 83

TEMPORARY INFORMATION — 37

80

21

## FIG. 10

72

**SERVICE PROVIDING SERVER**

52 — INPUT UNIT

53 — OUTPUT UNIT

54 — COMMUNICATION UNIT

CONTROL UNIT

92 — OVERALL PROCESS UNIT

91 — ONE-WAY FUNCTION

STORAGE UNIT

VERIFICATION TARGET DATA — 40

DATA IDENTIFIER — 42

TEMPORARY INFORMATION — 62

90

51

## FIG. 11

```
SERVICE                              USER
PROVIDING SERVER  ──72               TERMINAL  ──71

                                       START

                               SPECIFY DATA IDENTIFIER (i)  ──SP50

                               TRANSMIT DATA IDENTIFIER     ──SP51
                                  (i) AND SECRET KEY (Kj)

RECEIVE DATA IDENTIFIER (i)  ──SP52
   AND SECRET KEY (Kj)

SPECIFY VERIFICATION          ──SP53
   TARGET DATA (Mi)

     GENERATE                 ──SP54
  EVIDENCE DATA (Si)

     TRANSMIT                 ──SP55
  EVIDENCE DATA (Si)

                               RECEIVE EVIDENCE DATA (Si)   ──SP56

                               COMPARE EVIDENCE DATA (Si)   ──SP57
                                AND EVIDENCE DATA (Ti)

                                   DISPLAY RESULT           ──SP58

                                      FINISH
```

# FIG. 12

101

USER TERMINAL

22 — INPUT UNIT

23 — OUTPUT UNIT

24 — COMMUNICATION UNIT

CONTROL UNIT

112 — OVERALL PROCESSING UNIT

31 — RANDOM NUMBER GENERATION UNIT

32 — PRIME NUMBER GENERATION UNIT

33 — BASIC OPERATION UNIT

111 — ONE-WAY FUNCTION

STORAGE UNIT

COMMUNICATION DATA

VERIFICATION TARGET DATA — 40

DATA IDENTIFIER — 42

SECRET KEY — 35

PUBLIC PARAMETER — 36

TEMPORARY INFORMATION — 37

110

21

# FIG. 13

```
┌─────────────────┐              ┌─────────────────┐
│     SERVICE     │─ 102         │      USER       │─ 101
│ PROVIDING SERVER│              │    TERMINAL     │
└─────────────────┘              └─────────────────┘
        ┆                                 │
        ┆                            ┌──────────┐
        ┆                            │  START   │
        ┆                            └──────────┘
        ┆                                 │
        ┆                        ┌──────────────────────┐
        ┆                        │ INPUT INITIAL SETTING │─ SP60
        ┆                        └──────────────────────┘
        ┆                                 │
        ┆                   ┌────────────────────────────────┐
        ┆                   │ GENERATE PUBLIC PARAMETER (N)   │─ SP61
        ┆                   └────────────────────────────────┘
        ┆                                 │
        ┆                   ┌────────────────────────────────┐
        ┆                   │ GENERATE SECRET KEYS (g, d, k)  │─ SP62
        ┆                   └────────────────────────────────┘
        ┆                                 │
        ┆                   ┌────────────────────────────────┐
        ┆                   │ TRANSMIT PUBLIC PARAMETER (N)   │
        ┆                   └────────────────────────────────┘
        ┆                                 │          SP63
┌──────────────────────────┐             ┆
│ RECEIVE PUBLIC PARAMETER (N) │─ SP64    ┆
└──────────────────────────┘             ┆
        │                                ┆
┌──────────────────────────┐             ┆
│ STORE PUBLIC PARAMETER (N)│─ SP65       ┆
└──────────────────────────┘             ┆
        │                                ┆
┌──────────────────────────┐             ┆
│  TRANSMIT REGISTRATION    │─ SP66       ┆
│     PROCESS RESULT        │             ┆
└──────────────────────────┘             ┆
        │                            SP67 ┆
        └─────────────────────┐          ┆
                       ┌──────────────────────┐
                       │  RECEIVE REGISTRATION │
                       │    PROCESS RESULT     │
                       └──────────────────────┘
                                 │
                          ╱───────────────╲
                         ╱ IS REGISTRATION  ╲── NO
                         ╲   SUCCEEDED?      ╱
                          ╲───────────────╱
                                 │ YES   SP68
                       ┌──────────────────────┐
                       │    DISPLAY RESULT     │─ SP69
                       └──────────────────────┘
                                 │
                            ┌──────────┐
                            │  FINISH  │
                            └──────────┘
```

34

# FIG. 14

```
┌─────────────────────┐              ┌─────────────────┐
│      SERVICE        │── 102        │      USER       │── 101
│  PROVIDING SERVER   │              │    TERMINAL     │
└─────────────────────┘              └─────────────────┘
          ┆                                   ┆
          ┆                              ┌──────────┐
          ┆                              │  START   │
          ┆                              └──────────┘
          ┆                                   │
          ┆                          ┌──────────────────────┐
          ┆                          │ RECEIVE DATA REGISTRATION │── SP70
          ┆                          │      INSTRUCTION     │
          ┆                          └──────────────────────┘
          ┆                                   │
          ┆                          ┌──────────────────────┐
          ┆                          │ GENERATE DATA IDENTIFIER (i) │── SP71
          ┆                          └──────────────────────┘
          ┆                                   │
          ┆                          ┌──────────────────────┐
          ┆                          │ GENERATE TRACE DATA (mi (j)) │── SP72
          ┆                          └──────────────────────┘
```

IS REGISTRATION SUCCEEDED?

SP70 — RECEIVE DATA REGISTRATION INSTRUCTION

SP71 — GENERATE DATA IDENTIFIER (i)

SP72 — GENERATE TRACE DATA (mi (j))

SP73 — TRANSMIT DATA IDENTIFIER (i (j)), VERIFICATION TARGET DATA (Mi), AND TRACE DATA (mi (j))

SP74 — RECEIVE DATA IDENTIFIER (i (j)), VERIFICATION TARGET DATA (Mi), AND TRACE DATA (mi (j))

SP75 — STORE DATA IDENTIFIER (i (j)), VERIFICATION TARGET DATA (Mi), AND TRACE DATA (mi (j))

SP76 — TRANSMIT REGISTRATION PROCESS RESULT

SP77 — RECEIVE REGISTRATION PROCESS RESULT

SP78 — IS REGISTRATION SUCCEEDED? NO / YES

SP79 — DISPLAY RESULT

# FIG. 15

## FIG. 16

| SERVICE PROVIDING SERVER ~102 | USER TERMINAL ~101 |

START

SPECIFY DATA IDENTIFIER (i) ~SP80

GENERATE DATA IDENTIFIER (i) AND PARAMETER (h) ~SP81

GENERATE RANDOM NUMBER (R (j)) ~SP82

TRANSMIT DATA IDENTIFIER (i (j)), RANDOM NUMBER (R (j)) AND PARAMETER (h) ~SP83

TRANSMIT DATA IDENTIFIER (i (j)), RANDOM NUMBER (R (j)), AND PARAMETER (h) ~SP84

SPECIFY VERIFICATION TARGET DATA (Mi) ~SP85

GENERATE EVIDENCE DATA (Si, Ui) ~SP86

TRANSMIT EVIDENCE DATA (Si, Ui) ~SP87

RECEIVE EVIDENCE DATA (Si, Ui) ~SP88

GENERATE EVIDENCE DATA (Vi) ~SP89

COMPARE EVIDENCE DATA (Vi) AND EVIDENCE DATA (Si) ~SP90

DISPLAY RESULT ~SP91

FINISH

## INTERNATIONAL SEARCH REPORT

| International application No. |
| --- |
| PCT/JP2012/078249 |

**A. CLASSIFICATION OF SUBJECT MATTER**

*H04L9/32*(2006.01)i, *G06F12/00*(2006.01)i, *G06F21/24*(2006.01)i, *G09C1/00* (2006.01)i

According to International Patent Classification (IPC) or to both national classification and IPC

**B. FIELDS SEARCHED**

Minimum documentation searched (classification system followed by classification symbols)
H04L9/32, G06F12/00, G06F21/24, G09C1/00

Documentation searched other than minimum documentation to the extent that such documents are included in the fields searched

| | | | |
| --- | --- | --- | --- |
| Jitsuyo Shinan Koho | 1922-1996 | Jitsuyo Shinan Toroku Koho | 1996-2012 |
| Kokai Jitsuyo Shinan Koho | 1971-2012 | Toroku Jitsuyo Shinan Koho | 1994-2012 |

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
| --- | --- | --- |
| X<br>Y | Ayad F. Barsoum, et al., "Provable Possession and Replication of Data over Cloud Servers", [online], Technical Reports, Centre for Applied Cryptographic Research (CACR) at the University of Waterloo, 2010, CACR 2010-32, [retrieved on 2012.11.30]. Retrieved from the Internet: <URL:http://cacr.uwaterloo.ca/techreports/2010/cacr2010-32.pdf> | 1-4,7-11,14<br>6,13 |
| X<br>Y | Sravan Kumar R, et al., "Data Integrity Proofs in Cloud Storage", [online], Proceedings of 2011 Third International Conference on Communication Systems and Networks (COMSNETS), IEEE, 2011, [retrieved on 2012.11.30]. Retrieved from the Internet: <URL:http://ieeexplore.ieee.org/xpls/abs_all.jsp?arnumber=5716422> | 1,5,8,12<br>6,13 |

☐ Further documents are listed in the continuation of Box C.  ☐ See patent family annex.

| | | | |
| --- | --- | --- | --- |
| * | Special categories of cited documents: | "T" | later document published after the international filing date or priority date and not in conflict with the application but cited to understand the principle or theory underlying the invention |
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
| --- | --- |
| 03 December, 2012 (03.12.12) | 11 December, 2012 (11.12.12) |

| Name and mailing address of the ISA/<br>Japanese Patent Office | Authorized officer |
| --- | --- |
| Facsimile No. | Telephone No. |

Form PCT/ISA/210 (second sheet) (July 2009)

**INTERNATIONAL SEARCH REPORT**

| International application No. |
| --- |
| PCT/JP2012/078249 |

**Box No. II**      **Observations where certain claims were found unsearchable (Continuation of item 2 of first sheet)**

This international search report has not been established in respect of certain claims under Article 17(2)(a) for the following reasons:

1. ☐ Claims Nos.:
     because they relate to subject matter not required to be searched by this Authority, namely:

2. ☐ Claims Nos.:
     because they relate to parts of the international application that do not comply with the prescribed requirements to such an extent that no meaningful international search can be carried out, specifically:

3. ☐ Claims Nos.:
     because they are dependent claims and are not drafted in accordance with the second and third sentences of Rule 6.4(a).

**Box No. III**      **Observations where unity of invention is lacking (Continuation of item 3 of first sheet)**

This International Searching Authority found multiple inventions in this international application, as follows:
     See extra sheet.

1. ☐ As all required additional search fees were timely paid by the applicant, this international search report covers all searchable claims.

2. ☒ As all searchable claims could be searched without effort justifying additional fees, this Authority did not invite payment of additional fees.

3. ☐ As only some of the required additional search fees were timely paid by the applicant, this international search report covers only those claims for which fees were paid, specifically claims Nos.:

4. ☐ No required additional search fees were timely paid by the applicant. Consequently, this international search report is restricted to the invention first mentioned in the claims; it is covered by claims Nos.:

**Remark on Protest**      ☐ The additional search fees were accompanied by the applicant's protest and, where applicable, the payment of a protest fee.

                                  ☐ The additional search fees were accompanied by the applicant's protest but the applicable protest fee was not paid within the time limit specified in the invitation.

                                  ☐ No protest accompanied the payment of additional search fees.

Form PCT/ISA/210 (continuation of first sheet (2)) (July 2009)

**INTERNATIONAL SEARCH REPORT**

International application No.

PCT/JP2012/078249

Continuation of Box No.III of continuation of first sheet(2)

Document 1: Ayad F. Barsoum, et al., Provable Possession and Replication of Data over Cloud Servers, [online], Technical Reports, Centre for Applied Cryptographic Research (CACR) at the University of Waterloo, 2010, CACR 2010-32, [retrieved on 2012.11.30]. Retrieved from the Internet: <URL: http://cacr.uwaterloo.ca/techreports/2010/cacr2010-32.pdf>

Document 1 (in particular, "More ASA Based PDP Schemes" in "3.1 Provable Data Possession (PDP)" and Fig.2) discloses that in a system including a verifier and a remote server, the verifier transmits a random number r (corresponding to "information for verification") to the remote server; the remote server calculates a response R (corresponding to "server-side evidence data") by using a data file (corresponding to "verification target data") and the random number r and transmits the response R to the verifier; and the verifier confirms whether the value R' ("user terminal-side evidence data"), calculated on the basis of a random number r, is equal to the response R, received from the remote server.

Therefore, the invention of claim 1 cannot be considered to be novel in the light of the invention disclosed in the document 1, and does not have a special technical feature.

Accordingly, the following three inventions (invention groups) are involved in claims.

Meanwhile, the invention of claim 1 having no special technical feature is classified into invention 1.

(Invention 1) claims 1-4 and 8-11

A data holding verification system in which a user terminal transmits a random number to a server device as information for verification.

(Invention 2) claims 5, 6, 12 and 13

A data holding verification system in which a user terminal transmits a second secret key, which is used in generating a first evidence, to a server device as information for verification.

(Invention 3) claims 7 and 14

A data holding verification system in which a user terminal transmits a parameter, which is generated by using a third secret key, and a random number for each of divided data of verification target data to a server device as information for verification.

Form PCT/ISA/210 (extra sheet) (July 2009)

**REFERENCES CITED IN THE DESCRIPTION**

**Non-patent literature cited in the description**

• **GIUSEPPE ATENIESE ; RANDAL BURNS ; REZA CURTMOLA ; JOSEPH HERRING ; LEA KISSNER ; ZACHARY PETERSON ; DAWN SONG.** Provable Data Possession at Untrusted Stores. *Proceedings of 14th ACM Conference on Computer and Communications Security,* 2007